# EUROPEAN PATENT SPECIFICATION

(11) **EP 2 772 523 B1**
(45) Date of publication and mention of the grant of the patent: **28.11.2018**
(21) Application number: 12844095.5
(22) Date of filing: 15.10.2012
(51) Int. Cl.: C09K 9/02, B43K 19/00, C09D 13/00

(54) **REVERSIBLY THERMOCHROMIC COMPOSITION**
REVERSIBEL THERMOCHROME ZUSAMMENSETZUNGEN
COMPOSITION THERMOCHROMIQUE DE MANIÈRE RÉVERSIBLE

(30) Priority: 25.10.2011 JP 2011233770; 31.10.2011 JP 2011238266; 14.12.2011 JP 2011272867
(43) Date of publication of application: 03.09.2014
(73) Proprietor: Kabushiki Kaisha Pilot Corporation, Tokyo 104-8304 (JP)
(72) Inventor: TOZUKA, Taro, Hiratsuka-Shi, Kanagawa - ken (JP); NAKAMURA, Hisashi, Nagoya-Shi, Aichi- Ken (JP)
(74) Representative: Busher, Samantha Jane
(86) International application number: PCT/JP2012/076613
(87) International publication number: WO 2013/061814

(56) References cited:
- EP-A2- 1 084 860
- JP-A- H0 665 568
- JP-A- H0 688 070
- JP-A- H0 688 071
- JP-A- H1 192 759
- JP-A- 2001 152 041
- JP-A- 2002 012 787
- JP-A- 2003 253 149
- JP-A- 2004 025 842
- JP-A- 2008 291 048
- JP-A- 2009 035 718
- JP-A- 2009 166 310
- JP-A- 2011 178 979
- JP-B2- 4 683 687
- JP-B2- S5 144 709
- JP-B2- S5 144 908
- US-A- 5 527 385

## Description

### TECHNICAL FIELD

The present invention relates to a composition showing reversible thermochromism. Specifically, this invention relates to a reversibly thermochromic composition used as a colorant (color material) incorporated in solid writing materials comprising solid cores, such as pencil leads or colored leads, to form handwriting showing reversible thermochromism.

### BACKGROUD ART

With respect to solid writing materials and writing ink compositions for forming thermochromic handwriting, several proposals have been hitherto disclosed (see, for example, Patent documents 1 to 5).

The above solid writing material comprises a reversibly thermochromic composition alone or enclosed in microcapsules as a colorant dispersed in wax serving as a excipient, and thereby forms handwriting that changes its color with temperature change. In particular, if adopting microcapsule pigment enclosing a reversibly thermochromic composition of heat-decoloring type, the writing material can be very conveniently used for writing or drawing on notebooks or pocketbooks because the handwriting can be easily decolored by frictional heat to correct clerical errors and the like.

Since containing the wax, such as, beeswax, japan wax, paraffin wax or microcrystalline wax, the solid writing material can impart smooth writing feeling. However, when the handwriting is intended to be decolored by friction, there is a problem in that it is too slippery to decolor clearly and, as a result, residual images are often seen at the decolored positions.

Accordingly, it is studied to employ a polyolefin wax, such as polyethylene wax, as the wax so that the residual images may be less likely to be visually recognized at the decolored positions. However, that wax makes the writing feeling heavier and increases the friction between the material and the writing surface such as paper. Consequently, thermal energy generated by the friction often makes the handwriting thinner. Further, when the writing material is overlayingly applied to, for example, a coloring book page, the recoated areas are often decolored by self-heating due to quick writing and hence it is often difficult to shade a picture.

In contrast, handwriting written in the writing ink comprising the reversibly thermochromic composition is less liable to suffer from the decoloration by overlaying application so seriously as that in the solid writing material. However, if, like a page of a notebook or pocketbook, there is a writing surface on each of the front and back sides, the writing ink may suffer from another problem. When handwriting written on the front side is heated and decolored by friction or the like, the applied thermal energy often conducts to the back side and hence is likely to discolor or erase handwriting on the back side. The solid writing material may also suffer from this problem.

As described above, handwriting written in the solid writing material or writing ink composition comprising the reversibly thermochromic composition is often accidentally erased or discolored in the areas not expected to be erased or discolored.

### PRIOR ART DOCUMENTS

### PATENT DOCUMENTS

[Patent document 1] Japanese Utility Model Laid-Open Publication No. 7(1995)-6248
[Patent document 2] Japanese Patent Laid-Open Publication No. 2005-1369
[Patent document 3] Japanese Patent Laid-Open Publication No. 2008-291048
[Patent document 4] Japanese Patent Laid-Open Publication No. 2009-166310
[Patent document 5] Japanese Patent Laid-Open Publication No. 2011-178979
[Patent document 6] European Patent Laid-Open Publication No. 1 084 860
[Patent document 7] US Patent Laid-Open Publication No. 5,527,385
[Patent document 8] Japanese Patent Laid-Open Publication No. 2003-253149
[Patent document 9] Japanese Patent Laid-Open Publication No. 2004-025842
[Patent document 10] Japanese Patent Laid-Open Publication No. 2002-012787
[Patent document 11] Japanese Patent Laid-Open Publication No. 2001-152041
[Patent document 12] Japanese Patent Laid-Open Publication No. H11 92759
[Patent document 13] Japanese Patent Laid-Open Publication No. S5 081157
[Patent document 14] Japanese Patent Laid-Open Publication No. S5 075992
[Patent document 15] Japanese Patent Laid-Open Publication No. 2009-035718
[Patent document 16] Japanese Patent Laid-Open Publication No. H0 688071
[Patent document 17] Japanese Patent Laid-Open Publication No. H0 688070
[Patent document 18] Japanese Patent Laid-Open Publication No. H0 665568
[Patent document 19] Japanese Patent Laid-Open Publication No. 4 683 687

### NON-PATENT DOCUMENTS

[Non-patent document 1] *"*MAIKUROKAPUSERU -SONO SEIHOU, SEISHITU, OUYOU- (in Japanese), [Micro capsules -production, properties, application thereof-]", written by Tamotsu Kondo, Masumi Koishi, SANKYO PUBLISHING Co., Ltd. (1977)

### DISCLOSURE OF INVENTION

### PROBLEM TO BE SOLVED BY THE INVENTION

The present invention provides a solid writing material comprising a reversibly thermochromic composition which can be discolored or decolored by heating, and which forms handwriting that is less accidentally erased or discolored in the areas not expected to be erased or discolored.

### MEANS FOR SOLVING PROBLEM

The present invention provides a solid writing material comprising a reversibly thermochromic composition comprising a combination of
(a) a reversibly thermochromic component containing
   (a1) an electron-donative coloring organic compound,
   (a2) an electron-accepting compound, and
   (a3) a reaction medium for reversibly causing an electron transfer reaction between the components (a1) and (a2) in a specific temperature range; and
(b) a component for controlling heat conducting to the reversibly thermochromic component
wherein component (b) comprises an endothermic phase-change compound which is always present in a state incompatible with the reversibly thermochromic component (a) and which has a melting point lower than that of the component (a3).

### EFFECT OF THE INVENTION

The present invention prevents handwriting from being thinned or decolored by self-heating due to quick writing, and accordingly improves visual recognizability of handwriting written with solid writing materials
adopting
the reversibly thermochromic composition of the present invention. Further, the solid writing material of the present invention can be used for overlaying application indispensable for making light and shade in a colored area, for example, on a coloring book page.

### BRIEF DESCRIPTION OF THE DRAWINGS

Figure 1 illustrates discoloration behavior of a microcapsule pigment enclosing a reversibly thermochromic composition of heat-decoloring type.
Figure 2 illustrates discoloration behavior of a microcapsule pigment enclosing a color memorable reversibly thermochromic composition of heat-decoloring type.
Figure 3 illustrates discoloration behavior of a microcapsule pigment enclosing a reversibly thermochromic composition of heat color-developing type.
Figure 4 illustrates discoloration behavior provided by an endothermic phase-change compound in a reversibly thermochromic composition.

### BEST MODE FOR CARRYING OUT THE INVENTION

The reversibly thermochromic composition of the present invention necessarily comprises two components, namely, (a) a reversibly thermochromic component and (b) a component for controlling heat conducting to the reversibly thermochromic component. Those components are specifically explained below.

### (a) reversibly thermochromic component

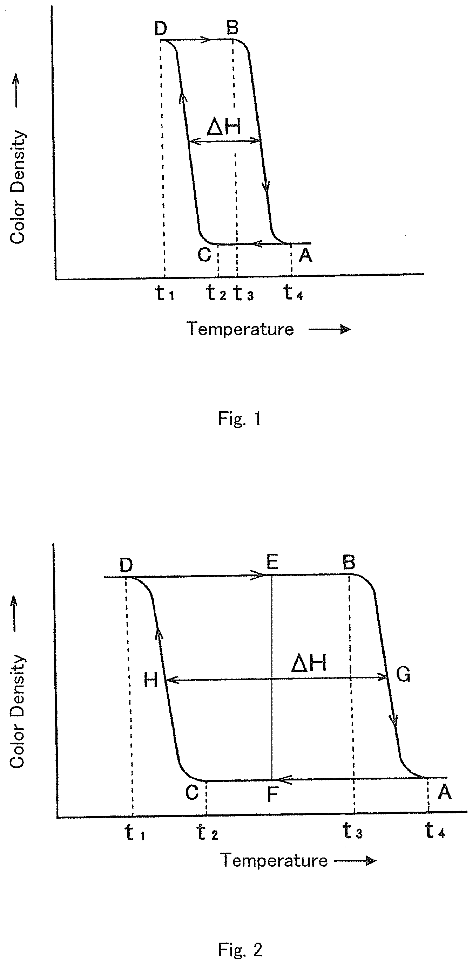

The reversibly thermochromic component (hereinafter, often referred to as "component (a)" for simplification) used in the present invention contains the components (a1) to (a3), which are described later. The component (a) may have properties of a relatively small hysteresis width (ΔH = 1 to 7°C) in which
(i) it changes the color before and after particular temperatures (discoloration points), and specifically it becomes colorless in a temperature range not lower than the higher discoloration point but develops color in a temperature range not higher than the lower discoloration point;
(ii) it stays exclusively in specific one of those color states in the ordinary temperature range; and
(iii) it changes one color state into the other color state when heated to a temperature not lower than the higher discoloration point or cooled to a temperature not higher than the lower discoloration point, then keeps the color state while the temperature is maintained, but returns to the color state in the ordinary temperature range when the heating or cooling is stopped (see, Figure 1).

If the component (a) becomes colorless when heated but develops color when cooled in the above manner, it can be often referred to as "reversibly thermochromic component of heat-decoloring type". That component (a) is described, for example, in Japanese Patent Publication Nos. 51(1976)-44706, 51(1976)-44707 and 1(1989)-29398.

It is also possible to use a component (a) having a large hysteresis property (ΔH = 8 to 50°C). Specifically, the component (a) may change the color along very different paths in the curve of plots showing color density change with temperature change between when the temperature increases from a region lower than the discoloration range and when the temperature decreases from a region higher than the discoloration range. Consequently, the component (a) may have color memorability in the specific temperature range (range between t₂ and t₃ [essentially two-phase retaining temperature range]), in which the color state depends on the color-developed state in a range lower than the completely coloring temperature (t₁) or on the decolored state in a range higher than the completely decoloring temperature (t₄). The component may be of heat-decoloring type (it becomes colorless when heated and develops color when cooled), and may be enclosed in microcapsules. The reversibly thermochromic component having color memorability is described, for example, in Japanese Patent Publication No. 4(1992)-17154 and Japanese Patent Laid-Open Publication Nos. 7(1995)-179777, 7(1995)-33997 and 8(1996)-39936. It is also possible to use a reversibly thermochromic component that develops color when heated, in contrast.

The color density-temperature hysteresis property of the component (a) is explained below with reference to the graph in Figure 2.

In Figure 2, color density and temperature are plotted on the vertical and horizontal axes, respectively. According as the temperature changes, the color density changes along the arrow. The point A indicates the density at the temperature t₄ (hereinafter, referred to as "completely decoloring temperature"), at which the component becomes completely colorless; the point B indicates the density at the temperature t₃ (hereinafter, referred to as "decoloration beginning temperature"), at which the component begins to be decolored; the point C indicates the density at the temperature t₂ (hereinafter, referred to as "coloration beginning temperature"), at which the component begins to develop color; and the point D indicates the density at the temperature t₁ (hereinafter, referred to as "completely coloring temperature"), at which the component develops color completely.

The length of the line segment EF stands for degree of the discoloration contrast, and that of the line segment HG stands for temperature width (hereinafter, referred to as "hysteresis width ΔH), which indicates degree of the hysteresis. The larger the ΔH value is, the more easily the color state can be retained before or after discoloration.

Here, the difference (Δt) between t₄ and t₃ or between t₂ and t₁ indicates sharpness of discoloration.

The completely decoloring temperature (t₄) and the coloration beginning temperature (t₂) are preferably in the ranges of 45 to 95°C and -50 to 10°C, respecttively, so that the component (a) may stay exclusively in specific one of the above color-developed and decolored states (in the color-developed state) in the ordinary temperature range and also so that handwriting written in the component (a) may be easily discolored (decolored) by friction.

The following explains why the completely decoloring temperature (t₄) and the coloration beginning temperature (t₂) are preferably 45 to 95°C and -50 to 10°C, respectively, in order that the color-developed state can be retained in the ordinary temperature range and also that handwriting can be easily discolored by friction. If the component in the color-developed state is heated to elevate the temperature above the decoloration beginning temperature (t₃) but the heating is stopped before the temperature reaches the completely decoloring temperature (t₄), the initial state can be recovered again. On the other hand, if the component in the decolored state is cooled to decrease the temperature below the coloration beginning temperature (t₂) but the cooling is stopped before the temperature reaches the completely coloring temperature (t₁), the color-developed state is retained. Accordingly, on the condition that the completely decoloring temperature (t₄) is not lower than 45°C, which is above the ordinary temperature range, the color-developed state is kept in normal usage. Also, on the condition that the coloration beginning temperature (t₂) is -50 to 10°C, which is below the ordinary temperature range, the decolored state is kept in normal usage.

Further, when intended to be decolored by friction, handwriting on a writing surface can be satisfyingly discolored by frictional heat generated by rubbing it several times with a friction element if the completely decoloring temperature (t₄) is 95°C or below.

If the completely decoloring temperature (t₄) is above 95°C, it is difficult for rubbing with a friction element to provide frictional heat enough to achieve the temperature (t₄). Accordingly, since handwriting cannot be easily discolored, rubbing is often repeated many times and also friction load is liable to be applied too much. There is, therefore, a fear of damaging the writing surface.

For the reasons described above, the above temperature ranges are important for convenient and practical use of the solid writing material or writing ink composition that provides handwriting in such discolored state as is alternatively selected to be visually recognized.

The completely decoloring temperature (t₄) is established preferably at a higher temperature so as to keep the color-developed state in normal use, but is preferably at a lower temperature so that friction can generate frictional heat above the completely decoloring temperature (t₄).

Accordingly, the completely decoloring temperature (t₄) is preferably 50 to 90°C, more preferably 60 to 80°C.

Further, the coloration beginning temperature (t₂) is preferably established at a low temperature so as to keep the decolored state in normal use, and is preferably -50 to 5°C, more preferably -50 to 0°C.

When intended to be in the color-developed state, the component (a) of the present invention is preferably cooled with a general-purpose freezer as a cooling means. However, the cooling ability thereof is not lower than about -50°C, and hence the completely coloring temperature (t₁) is -50°C or above.

In the present invention, the hysteresis width (ΔH) is generally in the range of 50 to 100°C, preferably 55 to 90°C, more preferably 60 to 80°C.

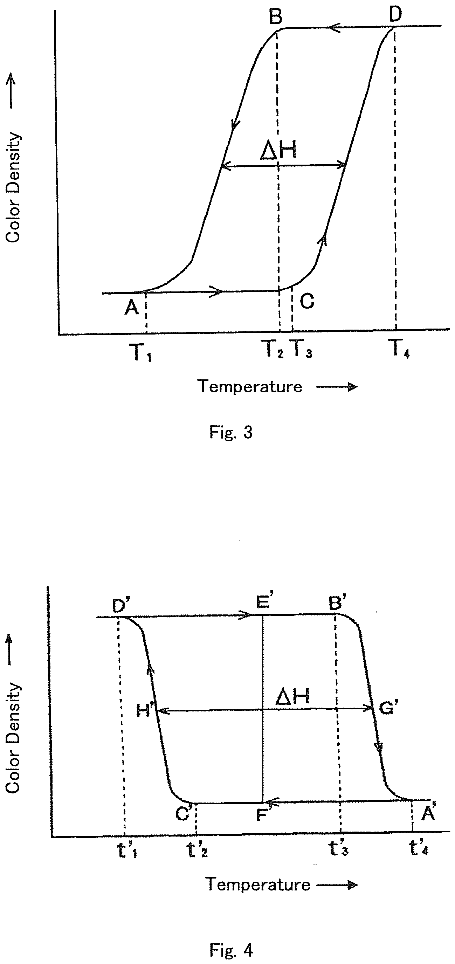

The above explanation with Figure 2 is provided for the composition of heat-decoloring type. However, it is also possible to use a composition of heat color-developing type, in contrast. The composition of heat color-developing type has a hysteresis property shown in Figure 3.

As the component (a1) usable in the present invention, so-called "leuco dyes" can be employed. Specifically, examples thereof include diphenylmethane phthalides, phenyl indolyl phthalides, indolyl phthalides, diphenylmethane azaphthalides, phenyl indolyl azaphthalides, fluorans, styrynoquinolines, and diazarhodamine lactones.

More specifically, concrete examples thereof include:
3,3-bis(p-dimethylaminophenyl)-6-dimethylaminophthalide,
3-(4-diethylaminophenyl)-3-(1-ethyl-2-methylindole-3-yl)phthalide,
3,3-bis(1-n-butyl-2-methylindole-3-yl)phthalide,
3,3-bis(2-ethoxy-4-diethylaminophenyl)-4-azaphthalide,
3-[2-ethoxy-4-(N-ethylanilino)phenyl]-3-(1-ethyl-2-methylindole-3-yl)-4-azaphthalide,
3,6-diphenyl aminofluoran,
3,6-dimethoxy fluoran,
3,6-di-n-butoxy fluoran,
2-methyl-6-(N-ethyl-N-p-tolylamino)fluoran,
3-chloro-6-cyclohexylaminofluoran,
2-methyl-6-cyclohexylaminofluoran,
2-(2-chloroanilino)-6-di-n-butylaminofluoran,
2-(3-trifluoromethylanilino)-6-diethylaminofluoran,
2-(N-methylanilino)-6-(N-ethyl-N-p-tolylamino)fluoran,
1,3-dimethyl-6-diethylaminofluoran,
2-chloro-3-methyl-6-diethylaminofluoran,
2-anilino-3-methyl-6-diethylaminofluoran,
2-anilino-3-methyl-6-di-n-butylaminofluoran,
2- xylidino-3-methyl-6-diethylaminofluoran,
1,2-benz-6-diethylaminofluoran,
1,2-benz-6-(N-ethyl-N-isobutylamino)fluoran,
1,2-benz-6-(N-ethyl-N-isoamylamino)fluoran,
2-(3-methoxy-4-dodecoxystyryl)quinoline,
spiro[5H-(1)benzopyrano(2,3-d)pyrimidine-5,1'(3'H) isobenzofuran]-3'-one,
2-(diethylamino)-8-(diethylamino)-4-methyl-spiro[5H-(1) benzopyrano(2,3-g)pyrimidine-5,1'(3'H)isobenzofuran]-3-one,
2-(di-n-butylamino)-8-(di-n-butylamino)-4-methyl-spiro-[5H-(1)benzopyrano(2,3-g)pyrimidine-5,1'(3'H)isobenzofuran]-3-one,
2-(di-n-butylamino)-8-(diethylamino)-4-methyl-spiro-[5H-(1)benzopyrano(2,3-g)pyrimidine-5,1'(3'H)isobenzofuran]-3-one,
2-(di-n-butylamino)-8-(N-ethyl-N-i-amylamino)-4-methyl-spiro[5H-(1)benzopyrano(2,3-g)pyrimidine-5,1'(3'H)isobenzofuran]-3-one,
2-(dibutylamino)-8-(dipentylamino)-4-methyl-spiro-[5H-(1)benzopyrano(2,3-g)pyrimidine-5,1'(3'H)isobenzofuran]-3-one,
3-(2-methoxy-4-dimethylaminophenyl)-3-(1-butyl-2-methylindole-3-yl)-4,5,6,7-tetrachlorophthalide,
3-(2-ethoxy-4-diethylaminophenyl)-3-(1-ethyl-2-methylindole-3-yl)-4,5,6,7-tetrachlorophthalide,
3-(2-ethoxy-4-diethylaminophenyl)-3-(1-pentyl-2-methylindole-3-yl)-4,5,6,7-tetrachlorophthalide,
4,5,6,7-tetrachloro-3-[4-(dimethylamino)-2-methylphenyl]-3-(1-ethyl-2-methyl-1H-indole-3-yl)-1(3H)-isobenzofuranone,
3',6'-bis[phenyl(2-methylphenyl)amino]-spiro[isobenzofuran-1(3H),9'-[9H]xanthene]-3-one,
3',6'-bis[phenyl(3-methylphenyl)amino]-spiro[isobenzofuran-1(3H),9'-[9H]xanthene]-3-one, and
3',6'-bis[phenyl(3-ethylphenyl)amino]-spiro[isobenzofuran-1(3H),9'-[9H]xanthene]-3-one.

Further, compounds such as pyridines, quinazolines and bisquinazoline, which are effective in developing fluorescent yellow or red color, can be also employed. Example thereof include 4-[2,6-bis(2-ethoxyphenyl)-4-pyridinyl]-N,N-dimethylbenzenamine.

The electron-accepting compound of the component (a2) used in the present invention can be selected from groups of compounds having active protons, pseudo-acidic compounds (which are not acids but act as acids to develop the color of the component (a1)) and compounds having electron holes.

The compounds having active protons are, for example, compounds having phenolic hydroxides, which includes not only monophenols having single phenol groups but also polyphenols having plural phenol groups. Further, they may have substituent groups such as alkyls, aryls, acyls, alkoxycarbonyls, carboxyls and esters thereof, amides, and halogens. They also include bis- or tris-phenol and phenol-aldehyde condensed resins. Furthermore, it is possible to adopt metal salts of the above compounds having active protons.

Specifically, concrete examples thereof include: phenol, o-cresol, tertiary butyl catechol, nonylphenol, n-octylphenol, n-dodecylphenol, n-stearyl phenol, p-chlorophenol, p-bromophenol, o-phenylphenol, n-butyl p-hydroxybenzoate, n-octyl p-hydroxybenzoate, resorcin, dodecyl gallate, 2,2-bis(4-hydroxyphenyl)propane, 4,4-dihydroxydiphenyl sulfone, 1,1-bis(4-hydroxyphenyl)ethane, 2,2-bis(4-hydroxy-3-methylphenyl)propane, bis(4-hydroxyphenyl)sulfide, 1-phenyl-1,1-bis(4-hydroxyphenyl)ethane, 1,1-bis(4-hydroxyphenyl)-3-methylbutane, 1,1-bis(4-hydroxyphenyl)-2-methyl propane, 1,1-bis(4-hydroxyphenyl) n-hexane, 1,1-bis(4-hydroxyphenyl) n-heptane, 1,1-bis(4-hydroxyphenyl) n-octane, 1,1-bis(4-hydroxyphenyl) n-nonane, 1,1-bis(4-hydroxyphenyl) n-decane, 1,1-bis(4-hydroxyphenyl) n-dodecane, 2,2-bis(4-hydroxyphenyl) butane, 2,2-bis(4-hydroxyphenyl)ethyl propionate, 2,2-bis(4-hydroxyphenyl)-4-methylpentane, 2,2-bis(4-hydroxyphenyl)hexafluoropropane, 2,2-bis-(4-hydroxyphenyl) n-heptane, and 2,2-bis(4-hydroxyphenyl) n-nonane.

Although the above compounds having phenolic hydroxides can develop the thermochromic properties most effectively, it is also possible to use compounds selected from the group consisting of aromatic carboxylic acids, aliphatic carboxylic acids of 2 to 5 carbon atoms, metal salts of carboxylic acids, acidic phosphoric esters and metal salts thereof, and 1,2,3-triazole and derivatives thereof.

Further, as the electron-accepting compound, the reversibly thermochromic composition of heat color-developing type can contain, for example, a particular alkoxyphenol compound having a straight- or side-chain alkyl of 3 to 18 carbon atoms (Japanese Patent Laid-Open Publication No. 11(1999)-129623), a particular hydroxybenzoate (Japanese Patent Laid-Open Publication No. 2001-105732) or a gallic ester (Japanese Patent Laid-Open Publication No. 2003-253149).

The reaction medium (a3) for reversibly causing an electron transfer reaction between the components (a1) and (a2) in a specific temperature range can be selected from alcohols, esters, ketones, and ethers.

The reaction medium (a3) is preferably a carboxylic ester compound which shows a ΔT value (melting point-cloud point) of 5°C or more but less than 50°C and which can form a color-memorabable reversibly thermochromic composition discoloring according to a large hysteresis in the color density-temperature curve (namely, according to a hysteresis in which paths are very different in the curve of plots showing color density change with temperature change between when the temperature increases from the lower side to the higher side and when it decreases from the higher side to the lower side). Examples thereof include: carboxylic esters having substituted aromatic rings in their molecules, esters of carboxylic acids having non-substituted aromatic rings with aliphatic alcohols of 10 or more carbon atoms, carboxylic esters having cyclohexyl groups in their molecules, esters of fatty acids of 6 or more carbon atoms with non-substituted aromatic alcohols or phenols, esters of fatty acids of 8 or more carbon atoms with branched- chain aliphatic alcohols, esters of dicarboxylic acids with aromatic alcohols or branched-chain aliphatic alcohols, dibenzyl cinnamate, heptyl stearate, didecyl adipate, dilauryl adipate, dimyristyl adipate, dicetyl adipate, distearyl adipate, trilaurin, trimyristin, tristearin, dimyristin, and distearin.

It is also possible to adopt an aliphatic ester compound derived from an aliphatic monoalcohol having an odd number not less than 9 of carbon atoms with an aliphatic carboxylic acid having an even number of carbon atoms, or an aliphatic acid ester compound which has 17 to 23 carbon atoms in total and which is derived from n-pentyl alcohol or n-heptyl alcohol with an aliphatic carboxylic acid having an even number of 10 to 16 of carbon atoms.

Specifically, examples of the esters include: n-pentadecyl acetate, n-tridecyl butyrate, n-pentadecyl butyrate, n-undecyl caproate, n-tridecyl caproate, n-pentadecyl caproate, n-nonyl caprylate, n-undecyl caprylate, n-tridecyl caprylate, n-pentadecyl caprylate, n-heptyl caprate, n-nonyl caprate, n-undecyl caprate, n-tridecyl caprate, n-pentadecyl caprate, n-pentyl laurate, n-heptyl laurate, n-nonyl laurate, n-undecyl laurate, n-tridecyl laurate, n-pentadecyl laurate, n-pentyl myristate, n-heptyl myristate, n-nonyl myristate, n-undecyl myristate, n-tridecyl myristate, n-pentadecyl myristate, n-pentyl palmitate, n-heptyl palmitate, n-nonyl palmitate, n-undecyl palmitate, n-tridecyl palmitate, n-pentadecyl palmitate, n-nonyl stearate, n-undecyl stearate, n-tridecyl stearate, n-pentadecyl stearate, n-nonyl eicosanoate, n-undecyl eicosanoate, n-tridecyl eicosanoate, n-pentadecyl eicosanoate, n-nonyl behenate, n-undecyl behenate, n-tridecyl behenate, and n-pentadecyl behenate.

As the ketones, aliphatic ketones having 10 or more carbon atoms in total are effectively employed. Examples thereof include: 2-decanone, 3-decanone, 4-decanone, 2-undecanone, 3-undecanone, 4-undecanone, 5-undecanone, 2-dodecanone, 3-dodecanone, 4-dodecanone, 5-dodecanone, 2-tridecanone, 3-tridecanone, 2-tetradecanone, 2-pentadecanone, 8-pentadecanone, 2-hexadecanone, 3-hexadecanone, 9-heptadecanone, 2-pentadecanone, 2-octadecanone, 2-nonadecanone, 10-nonadecanone, 2-eicosanone, 11-eicosanone, 2-heneicosanone, 2-docosanone, laurone and stearone.

Further, examples of arylalkyl ketones having 12 to 24 carbon atoms include: n-octadecanophenone, n-heptadecanophenone, n-hexadecanophenone, n-pentadecanophenone, n-tetradecanophenone, 4-n-dodecaacetophenone, n-tridecanophenone, 4-n-undecanoacetophenone, n-laurophenone, 4-n-decanoacetophenone, n-undecanophenone, 4-n-nonylacetophenone, n-decanophenone, 4-n-octylacetophenone, n-nonanophenone, 4-n-heptylacetophenone, n-octanophenone, 4-n-hexylacetophenone, 4-n-cyclohexylacetophenone, 4-tert-butylpropiophenone, n-heptaphenone, 4-n-pentylacetophenone, cyclohexyl phenyl ketone, benzyl-n-butyl ketone, 4-n-butylacetophenone, n-hexanophenone, 4-isobutylacetophenone, 1-acetonaphthone, 2-acetonaphthone, and cyclopentyl phenyl ketone.

As the ethers, aliphatic ethers having 10 or more carbon atoms in total are effectively employed. Examples thereof include: dipentyl ether, dihexyl ether, diheptyl ether, dioctyl ether, dinonyl ether, didecyl ether, diundecyl ether, didodecyl ether, ditridecyl ether, ditetradecyl ether, dipentadecyl ether, dihexadecyl ether, dioctadecyl ether, decanediol dimethyl ether, undecanediol dimethyl ether, dodecanediol dimethyl ether, tridecanediol dimethyl ether, decanediol diethyl ether, and undecanediol diethyl ether.

Further, as the component (a3), it is possible to use a compound represented by the following formula (1): 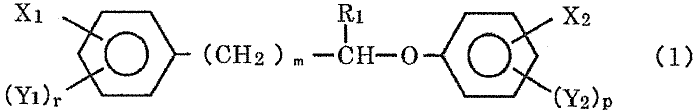 (in which R₁ is hydrogen or methyl; m is an integer of 0 to 2; one of X1 and X2 is -(CH₂)ₙOCOR₂ or -(CH₂)ₙCOOR₂, and the other is hydrogen; n is an integer of 0 to 2; R₂ is an alkyl or alkenyl group having 4 or more carbon atoms; each of Y₁ and Y₂ is independently hydrogen, an alkyl group of 1 to 4 carbon atoms, methoxy or a halogen; and each of r and p is independently an integer of 1 to 3).

The compound of the formula (1) in which R₁ is hydrogen is preferred because it provides a reversibly thermochromic composition having a larger hysteresis width, and more preferably R₁ and m are hydrogen and 0, respectively.

Among the compounds of the formula (1), further preferred is a compound represented by the following formula (2): 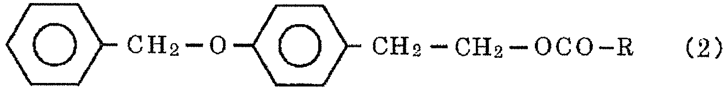 (in which R is an alkyl or alkenyl group of 8 or more carbon atoms, preferably an alkyl group of 10 to 24 carbon atoms, and more preferably an alkyl group of 12 to 22 carbon atoms).

Concrete examples of the above compound include: 4-benzyloxyphenylethyl octanoate, 4-benzyloxyphenylethyl nonanoate, 4-benzyloxyphenylethyl decanoate, 4-benzyloxyphenylethyl undecanoate, 4-benzyloxyphenylethyl dodecanoate, 4-benzyloxyphenylethyl tridecanoate, 4-benzyloxyphenylethyl tetradecanoate, 4-benzyloxyphenylethyl pentadecanoate, 4-benzyloxyphenylethyl hexadecanate, 4-benzyloxyphenylethyl heptadecanoate, and 4-benzyloxyphenylethyl octadecanoate.

In addition, as the component (a3), it is also possible to use a compound represented by the following formula (3): 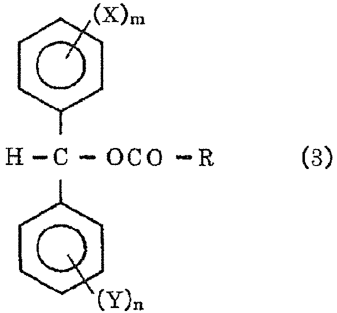 (in which R is an alkyl or alkenyl group having 8 or more carbon atoms; each of m and n is independently an integer of 1 to 3; and each of X and Y is independently hydrogen, an alkyl group of 1 to 4 carbon atoms, an alkoxy group of 1 to 4 carbon atoms, or a halogen).

Concrete examples of the above compound include: 1,1-diphenylmethyl octanoate, 1,1-diphenylmethyl nonanoate, 1,1-diphenylmethyl decanoate, 1,1-diphenylmethyl undecanoate, 1,1-diphenylmethyl dodecanoate, 1,1-diphenylmethyl tridecanoate, 1,1- diphenylmethyl tetradecanoate, 1,1-diphenylmethyl pentadecanoate, 1,1-diphenylmethyl hexadecanoate, 1,1-diphenylmethyl heptadecanoate, and 1,1-diphenylmethyl octadecanoate.

Furthermore, as the component (a3), it is still also possible to use a compound represented by the following formula (4): 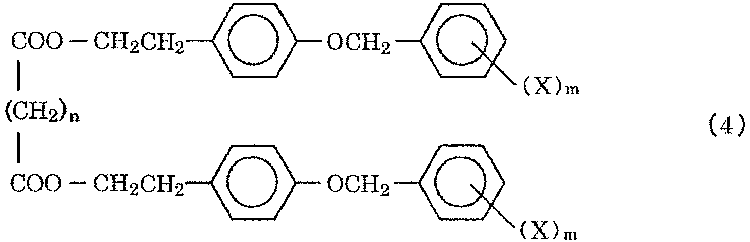 (in which X is hydrogen, an alkyl group of 1 to 4 carbon atoms, methoxy, or a halogen; m is an integer of 1 to 3; and n is an integer of 1 to 20).

Concrete examples of the compound represented by the above formula (4) include: diester of malonic acid with 2-[4-(4-chlorobenzyloxy)phenyl]ethanol, diester of succinic acid with 2-(benzyloxyphenyl)ethanol, diester of succinic acid with 2-[4-(3-methylbenzyloxy)phenyl]ethanol, diester of glutaric acid with 2-(4-benzyloxyphenyl]ethanol, diester of glutaric acid with 2-[4-(4-chlorobenzyloxy)phenyl]ethanol, diester of adipic acid with 2-(4-benzyloxyphenyl]ethanol, diester of pimelic acid with 2-(4-benzyloxyphenyl]ethanol, diester of suberic acid with 2-(4-benzyloxyphenyl]ethanol, diester of suberic acid with 2-[4-(3-methylbenzyloxy)phenyl]ethanol, diester of suberic acid with 2-[4-(4-chlorobenzyloxy)phenyl]ethanol, diester of suberic acid with 2-[4-(2,4-dichlorobenzyloxy)phenyl]ethanol, diester of azelaic acid with 2-(4-benzyloxyphenyl]ethanol, diester of sebacic acid with 2-(4-benzyloxyphenyl]ethanol, diester of 1,10-decanedicarboxylic acid with 2-(4-benzyloxyphenyl]ethanol, diester of 1,18-octadecanedicarboxylic acid with 2-(4-benzyloxyphenyl]ethanol, and diester of 1,18-octadecane-dicarboxylic acid with 2-[4-(2-methylbenzyloxy)phenyl]ethanol.

Still further, as the component (a3), it is yet also possible to use a compound represented by the following formula (5): 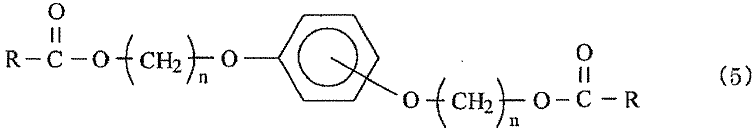 (in which R is an alkyl or alkenyl group of 1 to 21 carbon atoms; and n is an integer of 1 to 3).

Concrete examples of the compound represented by the above formula (5) include: diester of capric acid with 1,3-bis(2-hydroxyethoxy)benzene, diester of undecanoic acid with 1,3-bis(2-hydroxyethoxy)benzene, diester of lauric acid with 1,3-bis(2-hydroxyethoxy)benzene, diester of myristic acid with 1,3-bis(2-hydroxyethoxy)benzene, diester of butyric acid with 1,4-bis(hydroxymethoxy)benzene, diester of isovaleric acid with 1,4-bis(hydroxymethoxy)benzene, diester of acetic acid with 1,4-bis(2-hydroxyethoxy)benzene, diester of propionic acid with 1,4-bis(2-hydroxyethoxy)benzene, diester of valeric acid with 1,4-bis(2-hydroxyethoxy)benzene, diester of caproic acid with 1,4-bis(2-hydroxyethoxy)benzene, diester of carpylic acid with 1,4-bis(2-hydroxyethoxy)benzene, diester of capric acid with 1,4-bis(2-hydroxyethoxy)benzene, diester of lauric acid with 1,4-bis(2-hydroxyethoxy)benzene, and diester of myristic acid with 1,4-bis(2-hydroxyethoxy)benzene.

Yet further, as the component (a3), it is furthermore possible to use a compound represented by the following formula (6): 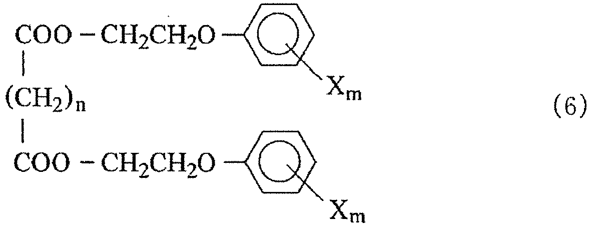 (in which X is hydrogen, an alkyl group of 1 to 4 carbon atoms, an alkoxy group of 1 to 4 carbon atoms, or a halogen; m is an integer of 1 to 3; and n is an integer of 1 to 20).

Concrete examples of the compound represented by the above formula (6) include: diester of succinic acid with 2-phenoxyethanol, diester of suberic acid with 2-phenoxyethanol, diester of sebacic acid with 2-phenoxyethanol, diester of 1,10-decanedicarboxylic acid with 2-phenoxyethanol, and diester of 1,18-octadecanedicarboxylic acid with 2-phenoxyethanol.

In the component (a) of the present invention, the component ratio among (a1), (a2) and (a3) is determined according to color density, discoloring temperature, kinds of the components and the like. However, in order to obtain desired properties, the ratio of (a1):(a2):(a3) is generally 1: 0.1 to 50: 1 to 800, preferably 1: 0.5 to 20: 5 to 200 by weight. Each of those components may be a mixture of two or more compounds.

The above component (a) may be directly dispersed in the solid writing material or writing ink composition, but is preferably enclosed in microcapsules to be used in the form of reversibly thermochromic microcapsule pigment (hereinafter, often referred to as "thermochromic microcapsules"). That is because the reversibly thermochromic composition can keep the same contents and hence can have the same effect under various application conditions.

The microcapsule pigment can additionally contain any (non-thermochromic) dye or pigment so that color changing (discoloration) may occur from one chromatic color to another.

The above component (a) can be microencapsulated according to various methods, such as, interfacial polymerization, interfacial polycondensation, in situ polymerization, liquid curing coating, phase separation from aqueous solutions, phase separation from organic solvents, melting dispersion cooling, air-suspension coating, and spray drying. Among them, the method is appropriately selected according to the use. Further, according to the purpose, the surface of the microcapsules can be further coated with an auxiliary resin film to improve durability or to modify the surface characteristics for practical use.

In the microcapsule pigment, each microcapsule may have a circular or non-circular section.

The weight ratio between the component (a) and the microcapsule wall membrane is generally 7:1 to 1:1, preferably 6:1 to 1:1.

If the ratio of the component (a) to the wall membrane is larger than the above range, the membrane is so thin that the durability of microcapsule against pressure and heat is liable to lower. On the other hand, however, if the ratio of the wall membrane to the component (a) is larger than the above range, the color density and vividness are liable to deteriorate when the component develops color.

From the practical viewpoint, the microcapsule pigment has a mean particle size of generally 0.1 to 50 µm, preferably 0.3 to 30 µm, more preferably 0.5 to 10 µm. If having a maximum outer diameter larger than 50 µm on average, the microcapsule pigment often lacks dispersion stability. However, if the maximum outer diameter is smaller than 0.1 µm on average, it is difficult for the pigment to develop color in a high concentration. That should be paid attention to. In the present invention, the mean particle size of microcapsules is represented by the D50 value in terms of volume obtained by measurement of particle outer diameter. Here, the mean particle size (median diameter) is calculated from values measured by means of laser scattering particle distribution analyzer LA-300 ([trademark], manufactured by HORIBA Ltd.).

### (b) component for controlling heat conducting to the reversibly thermochromic component

In the reversibly thermochromic composition of the present invention, the above reversibly thermochromic component (a) is discolored or decolored by heat applied from the outside and thereby the whole composition is changed in color. However, by controlling the heat conducting to the component (a), it becomes possible to prevent accidental discoloration or decoloration. Hereinafter, the component for controlling heat conducting to the component (a) is often referred to as "component (b)" for simplification.

The component (b) acts in the manner in which
(1) it reduces heat itself generated by friction or the like, or otherwise
(2) it absorbs heat applied from the outside and thereby inhibits conduction of the heat to the component (a). In either manner, the component (b) controls heat conduction to the component (a) and makes it possible to prevent accidental discoloration or decoloration.

Examples of the component (b) acting in the above manner include
(bi) an ester compound selected from the group consisting of sucrose fatty acid esters and dextrin fatty acid esters, and
(bii) an endothermic phase-change compound which is always present in a state incompatible with the component (a) and which has a melting point lower than that of the component (a3). Those (bi) and (bii) compounds function in at least one of the above manners (1) and (2). However, the component (b) is by no means limited to compounds functioning in only either one of the manners (1) and (2). For example, the component (bi) mainly acts in the manner (1) but is thought to act also in the manner (2). Each component (b) will be described below.

### (bi) ester compound selected from the group consisting of sucrose fatty acid esters and dextrin fatty acid esters

In the present invention, fatty acid esters of sucrose and dextrin can be used as the component (b). They make it possible not only to prevent accidental discoloration or decoloration but also to improve writing feeling. Specifically, since sucrose fatty acid esters and dextrin fatty acid esters have relatively low melting points, they are presumed to soften and absorb the frictional resistance when used for writing. Accordingly, by adding them into the composition, writing friction is reduced to inhibit heat generation. For example, when handwriting is quickly written with a conventional reversibly thermochromic solid writing material, heat is generated by friction between the writing material and the paper so largely that the temperature increases to make the component (a) colorless and hence that the previous handwriting is often decolored. In contrast, since the above ester compound is added in the composition of the present invention, heat generated by friction on the paper is reduced to prevent the handwriting from being decolored by the frictional heat caused by quick writing. Thus, quick writing is thought to become performable.

Further, overlaying application also becomes performable, and hence it becomes easy to shade pictures on paper. The component is, therefore, advantageously used for, for example, high-quality coloring books such as adult-oriented coloring books, for which demand in market has been rapidly increasing in recent years.

As the sucrose fatty acid esters usable in the present invention, preferred are esters of C12 to C22 fatty acids. Preferred fatty acids are palmitic acid and stearic acid. Concrete examples thereof include: a series of RYOTO SUGAR ESTER ([trademark], manufactured by MITSUBISHI-KAGAKU FOODS COORPORATION) and a series of SUGAR WAX ([trademark], manufactured by DAI-ICHI KOGYO SEIYAKU CO., LTD.).

As the dextrin fatty acid esters usable in the present invention, preferred are esters of C14 to C18 fatty acids. Preferred fatty acids are palmitic acid, myristic acid and stearic acid. Concrete examples thereof include: a series of RHEOPEARL ([trademark], manufactured by Chiba Flour Milling Co., Ltd.).

### (bii) endothermic phase-change compound which is always present in a state incompatible with the component (a) and which has a melting point lower than that of the component (a3)

As the component (b) in the present invention, it is possible to use an endothermic phase-change compound, which mainly absorbs heat and thereby which has an effect of preventing the heat from conducting to the component (a). This compound is necessarily present in a state incompatible with the component (a) and must have a melting point lower than that of the component (a3).

The reason why the endothermic phase-change compound (bii) incorporated in the composition prevents accidental discoloration or decoloration is presumed as follows. The reason is explained below with reference to Figure 4. If thermal energy is applied from the outside to a conventional reversibly thermochromic composition containing the components (a1), (a2) and (a3) in a color-developed state at room temperature, the composition begins to be gradually decolored at the temperature t'₃, which is lower than the melting point of the component (a3), according to the path shown in Figure 4. Until the temperature reaches t'₄, the composition keeps becoming colorless gradually. At last, the composition is completely decolored when the temperature increases above t'₄, which is almost the melting point of the component (a3). However, if the temperature is kept between t'₃ and t'₄ and then cooled down to room temperature, the composition is partially decolored.

The thermal energy corresponding to the temperature difference between t'₃ and t'₄ is thus consumed in decoloring the conventional reversibly thermochromic composition. In contrast, in the composition containing the component (bii) according to the present invention, the thermal energy is absorbed by the component (bii). Consequently, the composition of the present invention does not begin to be decolored and keeps a color-developed state even when the temperature increases to reach t'₃, which is the decoloration beginning temperature of the conventional thermochromic composition. The composition of the present invention begins to be decolored at t₃, which is higher than t'₃.

As described above, since the decoloration beginning temperature t₃ is located at a position higher than t'₃, the composition according to the present invention prevents accidental decoloartion.

On the other hand, however, the composition of the present invention can be discolored almost in the same temperature range as the conventional composition because the melting point of the component (a3) determines the temperature t₄, at which the composition becomes completely discolored in the second color-developed state.

The following is concrete explanation of the mechanism in an example where handwriting is made with a solid writing material that changes between in a color-developed state and in a decolored state. A conventional solid writing material contains a reversibly thermochromic composition comprising at least the compositions (a1), (a2) and (a3), but generates frictional heat when used for making handwriting, as described above. This thermal energy partially decolores the handwriting, and hence the handwriting appears to be thin. Accordingly, the user psychologically tends to have an intention of making the handwriting thicker, and hence tends to write more strongly and quickly. As a result, the frictional heat is more generated to increase the thermal energy and consequently to make the handwriting much thinner. In contrast, if the composition contains the component (bii) having a melting point lower than that of the component (a3), the component (bii) preferentially absorbs the thermal energy of frictional heat generated in writing. If being present in a system common to, namely, compatible with the components (a1), (a2) and (a3), the component (bii) rather brings an effect of assisting decoloration to make the handwriting further thinner or to erase the handwriting by some possibility. However, since being present in a state incompatible with them in the present invention, the component (bii) only consumes the thermal energy without affecting the color. Accordingly, the user writes handwriting neither strongly nor quickly, and consequently it is realized to obtain well-colored handwriting.

On the other hand, if the component (bii) has a melting point higher than that of the component (a3), the component (a3) absorbs the energy more preferentially than the component (bii). It is therefore difficult to obtain the effect of preventing decolaration.

Compounds usable as the component (bii) in the present invention have melting points lower than that of the component (a3). They are, for example, organic compounds, such as, alcohols, carboxylic acids, esters, ethers, ketones, and amides. Specifically, examples of the alcohols include: lauryl alcohol, dodecyl alcohol, myristyl alcohol, pentadecyl alcohol, stearyl alcohol, nonadecyl alcohol, eicosyl alcohol, behenyl alcohol, ceryl alcohol, melissyl alcohol, polyethylene glycol, and polypropylene glycol. Examples of the carboxylic acids include: lauric acid, myristic acid, pentadecanoic acid, palmitic acid, stearic acid, nonadecylic acid, eicosanoic acid, behenic acid, and tetracosanoic acid. Examples of the esters include an ester which has 13 or more carbon atoms in total and which is derived from a monovalent aliphatic fatty acid with an aliphatic monoalcohol or with a monoalcohol having an aliphatic ring. Concrete examples thereof include: pentadecyl acetate, n-tridecyl butyrate, n-pentadecyl butyrate, n-nonyl caprylate, n-undecyl caprylate, n-lauryl caprylate, n-tridecyl caprylate, n-pentadecyl caprylate, cetyl caprylate, stearyl caprylate, n-propyl caprate, n-heptyl caprate, n-undecyl caprate, n-lauryl caprate, n-tridecyl caprate, n-pentadecyl caprate, cetyl caprate, stearyl caprate, n-undecyl caproate, n-tridecyl caproate, n-pentadecyl caproate, n-nonyl caproate, n-undecyl caproate, stearyl caproate, n-hexyl caprylate, n-heptyl caprylate, n-octyl caprylate, methyl laurate, n-heptyl laurate, n-pentyl laurate, neopentyl laurate, 2-ethylhexyl laurate, n-octyl laurate, n-nonyl laurate, n-decyl laurate, n-undecyl laurate, lauryl laurate, n-tridecyl laurate, myristyl laurate, n-pentadecyl laurate, stearyl laurate, cyclohexylmethyl laurate, methyl myristate, n-pentyl myristate, n-heptyl myristate, n-nonyl myristate, n-decyl myristate, n-undecyl myristate, lauryl myristate, n-tridecyl myristate, myristyl myristate, n-pentadecyl myristate, cetyl myristate, stearyl myristate, cyclohexyl myristate, methyl palmitate, ethyl palmitate, n-propyl palmitate, n-pentyl palmitate, neopentyl palmitate, n-heptyl palmitate, n-nonyl palmitate, n-decyl palmitate, n-undecyl palmitate, lauryl palmitate, n-tridecyl palmitate, myristyl palmitate, n-pentadecyl palmitate, cetyl palmitate, stearyl palmitate, cyclohexylmethyl palmitate, methyl stearate, n-amyl stearate, n-heptyl stearate, neopentyl stearate, n-octyl stearate, n-nonyl stearate, n-decyl stearate, n-undecyl stearate, n-tridecyl stearate, myristyl stearate, n-pentadecyl stearate, cetyl stearate, stearyl stearate, eicosyl stearate, n-docosyl stearate, cyclohexylmethyl stearate, oleyl stearate, isostearyl stearate, cyclohexylmethyl stearate, methyl eicosanoate, n-amyl eicosanoate, n-heptyl eicosanoate, n-octyl eicosanoate, n-nonyl eicosanoate, n-decyl eicosanoate, n-undecyl eicosanoate, n-tridecyl eicosanoate, n-pentadecyl eicosanoate, ethyl behenate, n-amyl behenate, n-heptyl behenate, neopentyl behenate, n-octyl behenate, n-nonyl behenate, n-decyl behenate, n-undecyl behenate, n-tridecyl behenate, myristyl behenate, n-pentadecyl behenate, cetyl behenate, stearyl cyclohexylacetate, stearyl 2-cyclohexylpropionate, and neopentyl octanoate.

Examples of the esters also include an ester which has 18 or more carbon atoms in total and which is derived from an aliphatic divalent or polyvalent carboxylic acid with an aliphatic monoalcohol or with a monoalcohol having an aliphatic ring. Concrete examples thereof include: di-n-butyl sebacate, di-n-hexyl adipate, di-n-nonyl oxalate, di-n-decyl oxalate, di-n-undecyl oxalate, dilauryl oxalate, di-n-tridecyl oxalate, dimyristyl oxalate, di-n-pentadecyl oxalate, dicetyl oxalate, di-n-heptadecyl oxalate, distearyl oxalate, dilauryl malonate, di-n-tridecyl malonate, dimyristyl malonate, di-n-pentadecyl malonate, dicetyl malonate, di-n-heptadecyl malonate, distearyl malonate, di-n-nonyl succinate, di-n-decyl succinate, di-n-undecyl succinate, dilauryl succinate, di-n-tridecyl succinate, dimyristyl succinate, di-n-pentadecyl succinate, dicetyl succinate, diheptadecyl succinate, distearyl succinate, di-n-decyl glutarate, di-n-undecyl glutarate, dilauryl glutarate, di-n-tridecyl glutarate, dimyristyl glutarate, di-n-pentadecyl glutarate, dicetyl glutarate, di-n-heptadecyl glutarate, distearyl glutarate, di-n-decyl adipate, di-n-undecyl adipate, dilauryl adipate, di-n-tridecyl adipate, dimyristyl adipate, di-n-pentadecyl adipate, dicetyl adipate, di-n-heptadecyl adipate, distearyl adipate, di-n-docosyl adipate, di-n-decyl pimelate, di-n-undecyl pimelate, dilauryl pimelate, di-n-tridecyl pimelate, dimyristyl pimelate, di-n-pentadecyl pimelate, dicetyl pimelate, di-n-heptadecyl pimelate, distearyl pimelate, di-n-decyl suberate, di-n-undecyl suberate, dilauryl suberate, di-n-tridecyl suberate, dimyristyl suberate, di-n-nonyl sebacate, di-n-decyl sebacate, di-n-undecyl sebacate, dilauryl sebacate, di-n-tridecyl sebacate, dimyristyl sebacate, di-n-pentadecyl sebacate, dicetyl sebacate, di-n-heptadecyl sebacate, distearyl sebacate, di-n-pentadecyl suberate, dicetyl suberate, di-n-heptadecyl suberate, distearyl suberate, di-n-decyl azelate, di-n-undecyl azelate, dilauryl azelate, di-n-tridecyl azelate, dimyristyl azelate, di-n-pentadecyl azelate, dicetyl azelate, di-n-heptadecyl azelate, distearyl azelate, di-n-octyl 1,18-octadecylmethylenedicarboxylate, dicyclohexyl 1,18-octadecylmethylenedicarboxylate, and dineopentyl 1,18-octadecylmethylenedicarboxylate.

Examples of the esters still also include an ester which has 18 or more carbon atoms in total and which is derived from a monovalent fatty acid with an aliphatic dialcohol or polyalcohol or with a dialcohol or polyalcohol having an aliphatic ring. Concrete examples thereof include: ethylene glycol dicaprylic ester, ethylene glycol dicapric ester, ethylene glycol diundecanoic ester, ethylene glycol dilauric ester, ethylene glycol ditridecanoic ester, ethylene glycol dimyristic ester, ethylene glycol dipentadecanoic ester, ethylene glycol dipalmitic ester, ethylene glycol diheptadecanoic ester, ethylene glycol distearic ester, 1,3-propanediol dicaprylic ester, 1,3-propanediol dicapric ester, 1,3-propanediol diundecanoic ester, 1,3-propanediol dilauric ester, 1,3-propanediol ditridecanoic ester, 1,3-propanediol dimyristic ester, 1,3-propanediol dipentadecanoic ester, 1,3-propanediol dipalmitic ester, 1,3-propanediol diheptadecanoic ester, 1,3-propanediol distearic ester, 1,4-butanediol dicaprylic ester, 1,4-butanediol dicapric ester, 1,4-butanediol diundecanoic ester, 1,4-butanediol dilauric ester, 1,4-butanediol ditridecanoic ester, 1,4-butanediol dimyristic ester, 1,4-butanediol dipentadecanoic ester, 1,4-butanediol dipalmitic ester, 1,4-butanediol diheptadecanoic ester, 1,4-butanediol distearic ester, 1,5-pentanediol dicapric ester, 1,5-pentanediol diundecanoic ester, 1,5-pentanediol dilauric ester, 1,5-pentanediol ditridecanoic ester, 1,5-pentanediol dimyristic ester, 1,5-pentanediol dipentadecanoic ester, 1,5-pentanediol dipalmitic ester, 1,5-pentanediol diheptadecanoic ester, 1,5-pentanediol distearic ester, 1,6-hexanediol dicapric ester, 1,6-hexanediol diundecanoic ester, 1,6-hexanediol dilauric ester, 1,6-hexanediol ditridecanoic ester, 1,6-hexanediol dimyristic ester, 1,6-hexanediol dipentadecanoic ester, 1,6-hexanediol dipalmitic ester, 1,6-hexanediol diheptadecanoic ester, 1,6-hexanediol distearic ester, 1,7-pentanediol dicapric ester, 1,7-pentanediol diundecanoic ester, 1,7-pentanediol dilauric ester, 1,7-pentanediol ditridecanoic ester, 1,7-pentanediol dimyristic ester, 1,7-pentanediol dipentadecanoic ester, 1,7-pentanediol dipalmitic ester, 1,7-pentanediol diheptadecanoic ester, 1,7-pentanediol distearic ester, 1,8-octanediol dicapric ester, 1,8-octanediol diundecanoic ester, 1,8-octanediol dilauric ester, 1,8-octanediol ditridecanoic ester, 1,8-octanediol dimyristic ester, 1,8-octanediol dipentadecanoic ester, 1,8-octanediol dipalmitic ester, 1,8-octanediol diheptadecanoic ester, 1,8-octanediol distearic ester, 1,9-nonanediol dicapric ester, 1,9-nonanediol diundecanoic ester, 1,9-nonanediol dilauric ester, 1,9-nonanediol ditridecanoic ester, 1,9-nonanediol dimyristic ester, 1,9-nonanediol dipentadecanoic ester, 1,9-nonanediol dipalmitic ester, 1,9-nonanediol diheptadecanoic ester, 1,9-nonanediol distearic ester, 1,10-decanediol dicaprylic ester, 1,10-decanediol dicapric ester, 1,10-decanediol diundecanoic ester, 1,10-decanediol dilauric ester, 1,10-decanediol ditridecanoic ester, 1,10-decanediol dimyristic ester, 1,10-decanediol dipentadecanoic ester, 1,10-decanediol dipalmitic ester, 1,10-decanediol diheptadecanoic ester, 1,10-decanediol distearic ester, 1,5-pentanediol distearate, 1,2,6-hexanetriol dimyristate, pentaerythritol trimyristate, pentaerythritol tetralaurate, 1,4-cyclohexanediol dimyristyl, 1,4-cyclohexanediol didecyl, 1,4-cyclohexanediol dimyristyl, 1,4-cyclohexanediol distearyl, and dilaurate of 4-cyclohexanemethanol.

Examples of the esters yet also include an ester which has 24 or more carbon atoms in total and which is derived from a monovalent fatty acid with a dialcohol having an aromatic ring. Concrete examples thereof include: xyleneglycol dicaprylic ester, xyleneglycol dicapric ester, xyleneglycol diundecanoic ester, xyleneglycol dilauric ester, xyleneglycol ditridecanoic ester, xyleneglycol dimyristic ester, xyleneglycol dipentadecanoic ester, xyleneglycol dipalmitic ester, xyleneglycol diheptadecanoic ester, and xyleneglycol distearic ester.

Examples of the esters further include an ester which has 15 or more carbon atoms in total and which is derived from a monovalent fatty acid having an aromatic ring with an aliphatic monoalcohol or with a monoalcohol having an aliphatic ring. Concrete examples thereof include: hexyl 3,5-dimethylbenzoate, decyl 2-methylbenzoate, lauryl 2-methylbenzoate, myristyl 2-methylbenzoate, stearyl 2-methylbenzoate, cetyl 4-tert-butylbenzoate, behenyl 4-cyclohexylbenzoate, myristyl 4-phenylbenzoate, lauryl 4-octylbenzoate, stearyl 4-ethylbenzoate, decyl 4-isopropylbenzoate, stearyl 4-benzoylbenzoate, stearyl 4-chlorobenzoate, myristyl 3-bromobenzoate, stearyl 2-chloro-4-bromobenzoate, decyl 3,4-dichlorobenzoate, octyl 2,4-dibromobenzoate, cetyl 3-nitrobenzoate, cyclohexylmethyl 4-aminobenzoate, cetyl 4-diethylaminobenzoate, stearyl 4-anilinobenzoate, decyl 4-methoxybenzoate, cetyl 4-methoxybenzoate, octyl 4-butoxybenzoate, cetyl 4-hydroxybenzoate, stearyl p-chlorophenylacetate, cetyl p-chlorophenylacetate, neopentyl salicylate, stearyl 2-naphthoate, cetyl benzilate, stearyl benzilate, decyl 3-benzoylpropionate, stearyl benzoate, myristyl benzoate, cyclohexylmethyl 2-benzoylpropionate, and cyclohexylmethyl cinnamate.

Examples of the esters furthermore include an ester which has 14 or more carbon atoms in total and which is derived from a monovalent carboxylic acid having an aromatic ring with a monoalcohol having an aromatic ring. Concrete examples thereof include: benzyl salicylate, 4-methoxymethylphenylmethyl salicylate, 4-chlorophenylmethyl benzoate, benzyl cinnamate, phenyl 4-tert-butylbenzoate, 4-chlorobenzyl 2-methylbenzoate, and 4-methoxyphenylmethyl benzoate.

Examples of the esters still further include an ester which has 15 or more carbon atoms in total and which is derived from a monovalent fatty acid with a monoalcohol having an aromatic ring. Concrete examples thereof include: 4-chlorophenylmethyl caprylate, 4-chlorophenylmethyl caprate, 4-methoxyphenylmethyl laurate, 4-methoxyphenylmethyl myristate, 4-nitrophenylmethyl stearate, 4-methylphenylmethyl caprylate, 2-chlorophenylmethyl myristate, 4-chlorophenyl 11-bromolaurate, 4-isopropylphenyl stearate, stearyl 2-naphthoate, cetyl benzilate, stearyl benzilate, benzyl caprate, benzyl palmitate, 3-phenylpropyl stearate, and phenyl 11-bromolaurate.

Examples of the esters yet further include an ester which has 16 or more carbon atoms in total and which is derived from a divalent fatty acid with a monoalcohol having an aromatic ring. Concrete examples thereof include: dibenzyl sebacate, and dineopentyl 4,4'-diphenyldicarboxylate.

Further, the component (bii) can be selected from the examples described above for the component (a3). Specifically, if having a melting point lower than that of the substance adopted as the component (a3), another substance for the component (a3) can be used as the component (bii).

The component (bii) used in the present invention necessarily has a melting point lower than that of the component (a3), and the difference between the melting points is preferably about 3 to 70°C. If the difference is larger than that range, the thermal energy begins to be absorbed at a temperature lower than the decoloration beginning temperature and hence the component (bii) may need to be incorporated in a much amount. On the other hand, if the difference is smaller than the above range, the component (bii) absorbs the thermal energy insufficiently at the decoloration beginning temperature and accordingly there is fear that decoloration may start. The difference is, therefore, preferably in the above range so as to prevent handwriting from accidental decoloration.

For the purpose of making the effect of the present invention more remarkable, the blending ratio of the components (a3):(bii) is 1:0.1 to 3, preferably 1:0.3 to 2, by weight. If the ratio is smaller than that range, the component (bii) absorbs heat so insufficiently that it may be impossible to prevent decoloration. However, if the ratio is larger than that range, the content of the component (a) is so small that the color density tends to be lowered. Accordingly, the ratio is preferably in the above range both because handwriting can have sufficient color density and because accidental decoloration can be avoided.

If the composition of the present invention contains the component (bii), the component (bii) needs to be always present in a state incompatible with the above component (a). This can be realized by separating them with an impermeable material.

Specifically, the components (a) and (bii) are separated with a resin incompatible with them. Preferably, either of the components (a) and (bii) is enclosed in microcapsules to make them incompatible with each other. More preferably, each of the components (a) and (bii) is individually enclosed in microcapsules to make them incompatible with each other. That is particularly preferred because the components in such form are easily processed in manufacture of solid writing materials and aqueous writing ink compositions. In addition, it becomes possible both to develop the heat-absorbing effect and to prevent deformation by environmental temperature.

The microcapsule enclosing the component (bii) (hereinafter, often referred to as "endothermic capsule") is not particularly limited on the mean particle size, but preferably has a mean particle size of 0.5 to 50 µm. If the size is smaller than that range, the microcapsule comprises a wall material in a large amount and hence the content of the component (bii) tends to be lowered. On the other hand, if the size is larger than that range, the microcapsule has such a small surface area that the heat-absorbing effect may be impaired or that the dispersion stability and processability tend to be lowered in manufacture of solid writing materials and writing ink compositions. The mean particle size is more preferably 1 to 30 µm, and further preferably 1 to 20 µm. The size in that range provides favorable heat-absorbing effect and improves the dispersion stability and processability. The mean particle size is measured in the same manner as that of the microcapsules enclosing the component (a).

In the present invention, the components (bi) and (bii) can be used in combination. Since the component (bi) inhibits generation of frictional heat and, at the same time, since the component (bii) absorbs the generated heat, the combination thereof brings a synergistic effect.

### (c) other additives

The composition of the present invention can contain various additives, such as, antioxidants, ultraviolet absorbers, infrared absorbing agents, solubilizers, preservatives, and antimold agents, unless they impair the effect of the invention. They can be arbitrarily selected from those conventionally known.

The composition of the present invention can also contain a hindered amine compound as an additive. It is characteristic of the hindered amine compound to make residual images less visually recognizable in the area where handwriting is decolored. Accordingly, the hindered amine compound can improve re-writability of the target writing surface without impairing the appearance thereof, and consequently enhances merchantability of the composition. The hindered amine compound is, therefore, preferably used.

Concrete examples of the hindered amine compound are as follows:
bis(2,2,6,6-tetramethyl-4-piperidyl) sebacate,
bis(1,2,2,6,6-pentamethyl-4-piperidyl) sebacate,
a mixture of bis(1,2,2,6,6-pentamethyl-4-piperidyl) sebacate and methyl (1,2,2,6,6-pentamethyl-4-piperidyl) sebacate,
bis(1,2,2,6,6-pentamethyl-4-piperidyl)[[3,5-bis(1,1-dimethylethyl)-4-hydroxyphenyl]methyl] butylmalonate,
bis(1,2,2,6,6-pentamethyl-4-piperidyl) 2-(3,5-di-t-butyl-4-hydroxybenzyl)-2-n-butylmalonate,
tetrakis(1,2,2,6,6-pentamethyl-4-piperidyl)-1,2,3,4-butanetetracarboxylate,
a mixed ester product of 1,2,3,4-butanetetracarboxylic acid with 1,2,2,6,6-pentamethyl-4-piperidinol and with 3,9-bis(2-hydroxy-1,1-dimethylethyl)-2,4,8,10-tetra-kispiro[5,5]undecane,
a mixed ester product of 1,2,3,4-butanetetracarboxylic acid with 1,2,2,6,6-pentamethyl-4-piperidinol and with 1-tridecanol,
1,2,2,6,6-pentamethyl-4-piperidyl-methacrylate,
N,N',N",N'"-tetrakis-(4,6-bis-(butyl(N-methyl-2,2,6,6-tetramethylpiperidine-4-yl)amino)-triazine-2-yl)-4,7-di-azadecane-1,10-diamine,
N-methyl-3-dodecyl-1-(2,2,6,6-tetramethyl-4-piperidinyl)pyrrolidine-2,5-dione,
poly[{6-(1,1,3,3-tetramethylbutyl)amino-1,3,5-triazine-2,4-diyl}{2,2,6,6-tetramethyl-4-piperidyl}-imino]hexamethylene{(2,2,6,6-tetramethyl-4-piperidyl)imino}),
a polymer of dimethyl succcinate with 2,2,6,6-tetramethyl-1-piperidineethanol,
a product of one-on-one reaction between a polymer of dimethyl succcinate with 4-hydroxy-2,2,6,6-tetramethyl-1-piperidineethanol and N,N',N",N"'-tetrakis-(4,6-bis(butyl(N-methyl-2,2,6,6-tetramethylpiperidine-4-yl)amino)-triazine-2-yl)-4,7-diazadecane-1,10-diamine,
a condensation polymer of N-(2,2,6,6-tetramethyl-4-piperidyl)butylamine with dibutylamine•1,3-triazine• N,N'-bis(2,2,6,6-tetramethyl-4-piperidyl-1,6-hexamethylenediamine,
a product of reaction between octane with bis(2,2,6,6-tetramethyl-1-(octyloxy)-4-piperidinyl) decanedioic ester (1,1-dimethylethylhydroperoxide), and
a product of reaction between 2-aminoethanol and a reaction product of cyclohexane with N-butyl-2,2,6,6-tetramethyl-piperidineamine-2,4,6-trichloro-1,3,5-triazine peroxide.

As the hindered amine compound, it is preferred to adopt a compound represented by the following formula (7): 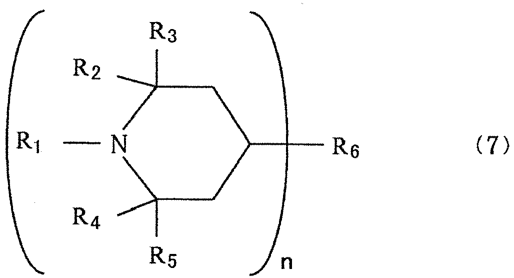 (in which R₁ is an alkyl group of 1 to 30 carbon atoms; each of R₂, R₃, R₄ and R₅ is independently an alkyl group of 1 to 5 carbon atoms; n is an integer of 1 or more; and R₆ is an n-valent organic residue).

The hindered amine compound preferably has a molecular weight of 1000 or less so that it can be rich in compatibility with a binder and so that it less undergoes bleeding out to form handwriting capable of keeping clear even after a lapse of time.

Further, the hindered amine compound also preferably has a melting point of 120°C or less. If it has such a low melting point, the reversibly thermochromic composition and the solid writing material or writing ink composition employing that can be manufactured without applying much heat and hence the ingredients of the composition can be kept from deteriorating in the production process.

### writing ink composition

The reversibly thermochromic composition of the present invention may be combined with other ingredients to produce a writing ink composition, which at least comprises the thermochromic composition and a dispersion medium. In the writing ink composition, the reversibly thermochromic composition serves as a color material.

The writing ink composition contains the reversibly thermochromic composition in a content of preferably 1 to 70 wt% based on the total weight. If the content is smaller than that range, the color density tends to be lowered. On the other hand, if it is larger than that range, the ink ejected from a writing instrument tends to decrease. The content is preferably 5 to 45 wt%, more preferably 10 to 40 wt% so that the color density may be sufficient and so that the ink may be ejected in an adequate amount.

In view of the processability and the like, when incorporated in the writing ink composition, the reversibly thermochromic composition preferably contains the components (a) and (b) in such form that they are individually enclosed in microcapsules to make them incompatible with each other.

The writing ink composition comprises at least the thermochromic composition and a dispersion medium. As the dispersion medium, water and, if necessary, solvents can be used. The solvents are preferably organic water-soluble solvents. Concrete examples thereof include: ethanol, propanol, butanol, glycerin, sorbitol, triethanolamine, diethanolamine, monoethanolamine, ethylene glycol, diethylene glycol, thiodiethylene glycol, polyethylene glycol, propylene glycol, butylene glycol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, polyethylene glycol monobutyl ether, ethylene glycol monomethyl ether acetate, sulfolane, 2-pyrrolidone, and N-methyl-2- pyrrolidone.

According to necessity, it is possible to add a polymer floccutant into the ink composition. If added into the writing ink composition, the polymer floccutant forms loose crosslinks in the reversibly thermochromic composition dispersed in the ink composition and consequently aggregates the thermochromic composition loosely. The ink composition thus containing the loose aggregates is prevented from separation of the thermochromic composition while held by capillary gaps in an ink absorbent (internal cotton) or in a fibrous polymer bundle of a marking pen.

The polymer floccutant is preferably an water-soluble polymer floccutant, and a nonionic water-soluble polymer compound is practically used. Specifically, examples thereof include: polyvinylpyrrolidone, polyethyleneoxide and water-soluble polysaccharides. Examples of the water-soluble polysaccharides include: gum tragacanth, guar gum, pullulan, cyclodextrin and nonionic water-soluble cellulose derivatives. Examples of the nonionic water-soluble cellulose derivatives include: methyl cellulose, hydroxyethyl cellulose, hydroxypropyl cellulose, hydroxyethyl methyl cellulose, and hydroxypropyl methyl cellulose.

Further, according to necessity, it is possible to add an agent for providing shear-thinning properties into the ink composition. If added into the writing ink composition, the agent for providing shear-thinning properties prevents leak of the ink composition loaded in a ballpoint pen from the gap between the ball and the tip while the ballpoint pen is not used. The agent also prevents the reversibly thermochromic composition from aggregation, precipitation and suspension. It still also can prevent the ink from flowing backward when the pen tip is left upward.

The writing ink composition containing the agent for providing shear-thinning properties preferably shows an ink viscosity of 200 to 3000 mPa•s and a shear-thinning index of 0.1 to 0.6 when the measurement is carried out at 20°C by means of E-type rotational viscometer at a shear rate of 3.84 s⁻¹. Here, the "shear-thinning index (n)" is a value calculated from the shear stress (T) and shear rate (j), which are obtained in rheological measurement with a viscometer, according to the empirical formula: T=Kjⁿ (where K is a non-Newtonian viscosity coefficient).

Examples of the shear-thinning tackifier usable in the writing ink composition include: xanthan gum, welan gum, succinoglycan (average molecular weight: about 100 to 8000000) which is an organic acid-modified hetero-polysaccharide comprising glucose and galactose as constituting monosaccharides; alcagum, guar gum, diutan gum, locust bean gum and derivatives thereof, hydroxyethyl cellulose, alkyl alginate esters, a polymer which has a molecular weight of 100000 to 150000 and which mainly comprises alkyl methacrylate esters; glucomannan, a thickening polysaccharide, such as agar or carrageenin, which has gelation ability and which is extracted from seaweed; benzylidene sorbitol and benzylidene xylitol or derivatives thereof, crosslinkable acrylic acid polymer, inorganic fine particles, polyglycerin fatty acid esters, polyoxyethylene sorbitan fatty acid esters, polyethylene glycol fatty acid esters, polyoxyethylenealkyl ethers, polyoxypropylenealkyl ethers, polyoxyethylenealkylphenyl ethers, nonionic surfactants, such as fatty acid amides, having HLB values of 8 to 12; salts of dialkyl or dialkenylsulfosuccinic acids, a mixture of anionic surfactant and n-alkyl-2-pyrrolidone, and a mixture of polyvinyl alcohol and acrylic resin.

The ink composition can be improved in drought resistance and also prevented from dripping down by adding a saccharide mixture which contains a starch saccharification product of octa- or more saccharides and/or a reduction product thereof in an amount of 30 wt% or more. The saccharide mixture contains the octa- or more saccharides in an amount of preferably 50 wt% or more, further preferably 70 wt% or more.

In order to assure drought resistance, it is necessary to form a dry film having certain strength. However, mono- and di-saccharides cannot form a dry film sufficiently and accordingly they provide only a small effect of preventing drying. Further, they have high water absorbency. Accordingly, if they are contained in the ink composition loaded in a ballpoint pen, the ink is liable to drip down when the pen tip is left downward. Although tri- to hepta-saccharides have smaller water absorbency than mono- and di-saccharides, they still cannot provide sufficient drought resistance. Even if they are added in a large amount with the intention of realizing sufficient drought resistance, the water absorbency may increase to cause dripping or they may be insufficiently dissolved and left to increase the solid content of the ink composition and consequently to lower drought resistance. The larger molecular weights the saccharides have, the lower water absorbency they have and hence the more easily they can form a dry film. Accordingly, octa- or more saccharides can prevent dripping under high humidity and also can improve drought resistance. In addition, they also improve other properties, such as, heat resistance, acid resistance and resistance to microorganisms, and hence can keep a stable state of the writing ink composition.

As the octa- or more saccharides, it is possible to adopt a starch saccharification product obtained by starch enzymolysis or a reduction product thereof obtained by reducing the terminal group of the starch saccharification product. When starch is decomposed, saccharides of various polymerization degrees are produced and it is technically difficult and costs a lot to isolate only the octa- or more saccharides. However, if containing the octa- or more saccharides in an amount of 30 wt% or more together with hepta- or less saccharides, the saccharide mixture can provide the above effects sufficiently and hence can prevent the ink from drying and dripping.

The saccharide mixture is preferably contained in the ink composition in an amount of 0.5 to 10.0 wt% based on the total weight of the composition. If the amount is smaller than that range, it is often difficult to improve drought resistance. On the other hand, if it is larger than that range, the writing ink composition tends to have such increased viscosity that the composition may bleed out, may drop down, may become poor in following performance, and occasionally may deteriorate in drought resistance. The amount is more preferably 0.1 to 8.0 wt% so that the ink composition may be improved in drought resistance, may be prevented from bleeding out and dropping down, and may have favorable following performance.

When intended to be loaded in a ballpoint pen for practical use, the ink composition can contain a lubricant to inhibit frictional abrasion of the ball receiving seat. Examples of the lubricant include: higher fatty acids such as oleic acid; nonionic surfactants having long-chain alkyl groups; polyether-modified silicone oil; thiophosphite triesters, such as, thiophosphite tri(alkoxycarbonylmethylester) and thiophosphite tri(alkoxycarbonylethylester); phosphate monoesters of polyoxyethylenealkyl ether or polyoxyethylenealkylaryl ether; phosphate diesters of polyoxyethylenealkyl ether or polyoxyethylenealkylaryl ether; and metal salts, ammonium salts, amine salts, and alkanolamine salts thereof.

According to necessity, the ink composition can contain various other additives. Specifically, examples thereof include: corrosion inhibitors, such as, benzotriazole, tolyltriazole, dicyclohexylammonium nitrite, diisopropylammonium nitrite, and saponin; preservatives and fungicides, such as, phenol, sodium salt of 1,2-benzthiazoline-3-one, sodium benzoate, sodium dehydroacetate, potassium sorbate, propyl paraoxybenzoate, and 2,3,5,6-tetrachloro-4-(methylsulfonyl)pyridine; humectants, such as, urea, nonionic surfactants, reduced or non-reduced hydrolyzed starch, oligosaccharides such as trehalose, sucrose, cyclodextrin, glucose, dextrin, sorbit, mannite, and sodium pyrophosphate; anti-foaming agents; dispersants; nonionic or fluorochemical surfactants that improve permeability of the ink.

The ink composition can contain any desirable (non-thermochromic) dye or pigment so that color changing (discoloration) may occur from one chromatic color to another.

Further, if necessary, the ink composition can contain acrylic resin, styrene-maleic acid copolymer resin, polyvinyl pyrrolidone, polyvinyl alcohol, dextrin and the like so that the ink can adhere and fix onto paper surface.

The writing ink composition can be used as an ink loaded in a writing instrument equipped with a tip at the top point, such as, a marking pen, a ballpoint pen, or a brush pen.

When the writing ink composition is intended to be loaded in a marking pen, there are no particular restrictions on the structure and shape of the pen itself. For example, the marking pen may comprise a marking pen tip, such as, a fibrous tip, a felt tip or a plastic tip, at the top point, and an ink absorbent of fiber bundle installed in the barrel. The ink is retained in the absorbent, and then supplied to the tip. The ink may be directly stored in the barrel, and then a predetermined amount of the ink may be supplied to the tip through an ink-flow controller of comb groove or of fiber bundle. Further, the ink directly stored in the barrel may be supplied to the tip in a predetermined amount by means of a valve gear.

When the writing ink composition is intended to be loaded in a ballpoint pen, there are no particular restrictions on the structure and shape of the pen itself. For example, the ballpoint pen may comprise a ballpoint pen tip at the top point, and an ink absorbent of fiber bundle installed in the barrel. The ink is retained in the absorbent, and then supplied to the tip. The ink may be directly stored in the barrel, and then a predetermined amount of the ink may be supplied to the tip through an ink-flow controller of comb groove or of fiber bundle. Further, the ballpoint pen may comprise an ink storage tube installed in the barrel. The ink storage tube is filled with the ink and connects to the ballpoint pen tip. In the ink storage tube, the rear end surface of the ink may be covered with a liquid plug (ink follower) to prevent the ink from flowing backward.

Examples of the ballpoint pen tip include: a tip having a ball held by a ball-holder which is formed by pressing an end part of a metal pipe inwardly to deform; a tip having a ball held by a ball-holder which is formed by machining a metal material with a drill or the like; and a tip having a ball held by a resin-made ball-receiving seat placed in a metal or plastic molded object. Further, the tip may have a structure in which the ball is urged forward by a spring.

The ball is generally made of cemented carbide, stainless steel, ruby, ceramic, resin, rubber or the like. The diameter thereof is generally 0.1 to 3.0 mm, preferably 0.3 to 1.5 mm, more preferably 0.3 to 1.0 mm.

The ink storage tube retaining the writing ink composition is made of, for example, metals or thermoplastic resins, such as, polyethylene, polypropylene, polyethylene terephthalate, and nylon. The ballpoint pen tip is fitted into the ink storage tube directly or via a connection member, and the tube is then charged with the writing ink composition and, if necessary, with an ink backflow prevention body composition, to produce a ballpoint pen refill.

The ink backflow prevention body composition comprises at least a hardly-volatile or non-volatile liquid. Examples of the hardly-volatile or non-volatile liquid include: Vaseline, spindle oil, castor oil, olive oil, purified mineral oil, liquid paraffin, polybutene, α-olefin, oligomer or co-oligomer of α-olefin, dimethyl silicone oil, methylphenyl silicone oil, amino-modified silicone oil, polyether-modified silicone oil, and fatty acid-modified silicone oil. They may be used singly or in combination of two or more.

The hardly-volatile or non-volatile liquid is preferably thickened to have a preferred viscosity by adding a gelling agent. Examples of the gelling agent include: clay-type thickner, such as, silica subjected to hydrophobic surface treatment, silica fine particles having surface subjected to methylation treatment, aluminum silicate, swelling mica, and bentonite or montmorillonite subjected to hydrophobic treatment; fatty acid metal soap, such as, magnesium stearate, calcium stearate, aluminum stearate, and zinc stearate; dextrin compounds, such as, tribenzylidene sorbitol, fatty acid amide, amide-modified polyethylene wax, hydrogenated castor oil, and fatty acid dextrin; and cellulose compounds. The ink backflow prevention body composition in liquid state can be used together with a solid backflow prevention body.

A resin film may be fixed on the point of the ballpoint pen tip so as to prevent the tip from drying. The film covers the ball, the ball-holder, and the gap between them in the tip, and thereby can prevent the tip from drying and also can keep the medium of the ink from evaporating away. The film can be formed from thermoplastic resin, thermosetting resin or UV curable resin.

The above ballpoint pen refill can be installed in a penholderbarrel to obtain a cap-type ballpoint pen. The refill also can be installed in a penholderbarrel to obtain a retractable type ballpoint pen. In the retractable type ballpoint pen, the refill is contained in the penholderbarrel while the tip is kept exposed to the outside air, and the point of the tip can be protruded from the opening of the penholderbarrel by the action of retractable mechanism. The retractable mechanism is, for example, of knock type, of screw type or of slide type.

The ballpoint pen of knock type comprises, for example, a knock button placed on the rear end or side surface of the barrel. When the knock button is pushed down, the tip point of the refill is protruded from the front end opening of the barrel. Otherwise, the barrel may be provided with a clip which is pushed to protrude the tip point of the refill from the front end opening of the barrel.

The ballpoint pen of screw type comprises, for example, a screw placed on the rear part of the barrel. When the screw is turned, the tip point of the refill is protruded from the front end opening of the barrel. The ballpoint pen of slide type comprises, for example, a sliding mechanism placed on the side surface of the barrel. When the sliding mechanism is operated, the tip point of the refill is protruded from the front end opening of the barrel. Otherwise, the barrel may be provided with a clip which is slid to protrude the tip point of the refill from the front end opening of the barrel.

The retractable type ballpoint pen may contain plural refills, and the tip point of one of the refills is protruded from the front end opening of the barrel by the action of retractable mechanism.

The above writing instrument can be used to form handwriting capable of being decolored or discolored by friction with fingers, by heating with a heater or by using a cooler.

Examples of the heater include: electrical heat-discoloring apparatus equipped with resistance heater, heat-discoloring apparatus filled with hot water or the like, and hair dryer. However, it is preferred to adopt a friction element as a simple discoloring means.

The friction element is preferably an elastic body, such as, an elastomer or plastic foam body, which is rich in elasticity and which can cause friction to generate frictional heat by rubbing the writing surface. The friction element is made of, for example, silicone resin, SEBS resin (styrene-ethylene/butadiene-styrene block copolymer), and polyester resin.

The friction element may be a desirably shaped object (friction body) separated from the writing instrument, and may be combined with the instrument to produce a stationery suite. However, the writing instrument equipped with the friction element is superior to the suite in portability. If the writing instrument is equipped with a cap, there are no particular restrictions on the position where the friction element is provided. For example, the cap itself may be made of material of the friction element or otherwise the friction element may be provided on the cap top point, side surface or end opening or on the barrel rear end opposite to the pen tip. If the writing instrument is of retractable type, there are also no particular restrictions on the position where the friction element is provided. For example, the barrel itself may be made of material of the friction element. If the writing instrument is equipped with a clip, the clip itself may be made of material of the friction element. It is also possible to provide the friction element in the area near the opening of the barrel, on the rear end of the barrel or on the knock button.

Examples of the cooler include: cooling-discoloring apparatus employing Peltier device, cooling-discoloring apparatus filled with refrigerant such as cold water or flake ice, ice pack, refrigerator, and freezer.

The writing instrument filled with the writing ink composition can be used to form handwriting containing the reversibly thermochromic composition. The handwriting thus formed has properties that cannot be provided by conventional thermochromic compositions. Specifically, if, like a page of a notebook or pocket book, there is a writing surface on each of the front and back sides, thermal energy applied onto the front side often conducts to the back side. For example, when handwriting written on the front side is intended to be erased or discolored to correct or indicate mistakes or the like, the part to be erased or discolored is rubbed with a friction element or the like to generate thermal energy. In that case, if on the back-side surface there is handwriting beforehand written with a writing instrument comprising the conventional thermochromic composition, the back-side handwriting is often thinned, partly erased or discolored by the thermal energy conducting from the front side even if that is not wanted to be erased or discolored. In contrast, however, even if undergoes the above operations, the handwriting containing the reversibly thermochromic composition of the present invention is not thinned, partly erased or discolored.

### solid writing material

The reversibly thermochromic composition of the present invention is combined with other ingredients to produce a solid writing material.

The solid writing material of the present invention contains the reversibly thermochromic composition in a content of preferably 10 to 70 wt% based on the total weight of the material. If the content is smaller than that range, the color density tends to be lowered. On the other hand, if it is larger than that range, the solid writing material tends to deteriorate in strength. The content is preferably 10 to 50 wt%, more preferably 10 to 40 wt% so that the writing material may be favorable both in color density and in strength.

In view of the processability and the like, when incorporated in the solid writing material, the reversibly thermochromic composition preferably contains the component (a) enclosed in microcapsules. That embodiment is preferred because the reversibly thermochromic composition can keep the same contents and hence have the same effect under various application conditions.

The solid writing material is always present in solid state. However, if the writing material contains a component having a relatively low melting point, such as the component (bii), in a certain amount or more, there is a fear that it may soften or melt to be deformed at a relatively high temperature like in summer time. Accordingly, the component (bii) is preferably used in the form of microcapsules because it can both provide the heat-absorbing effect and prevent deformation caused by environmental temperature. On the other hand, although the component (bi) can be used in the form of microcapsules, the microencapsulated component (bi) lowers the effect of reducing the writing friction. Accordingly, the component (bi) is preferably directly incorporated into the composition.

In view of the strength and the like, the solid writing material of the present invention is preferably produced by dispersing and hardening the reversibly thermochromic composition in a excipient. The excipient functions to keep the shape of the solid writing material, and is, for example, wax, gelling agent or clay. As the wax, it is possible to adopt any conventionally known wax. Examples of the wax include: carnauba wax, wood wax, beeswax, microcrystalline wax, montan wax, candelilla wax, low molecular weight polyethylene, and paraffin wax. As the gelling agent, it is also possible to adopt any conventionally known gelling agent. Examples of the gelling agent include: 12-hydroxystearic acid, dibenzylidene sorbitols, tribenzylidene sorbitols, amino acid-based oils, and alkali metal salts of higher fatty acids. Examples of the clay minerals include: bentonite, and montmorillonite. Those can be used singly or in combination.

Among the above substances for the excipient, polyolefin wax is preferred in view of the availability and treatability.

Examples of the polyolefin wax include: waxes of polyethylene, plypropylene, polybutylene, α-olefin polymer, ethylene-propylene copolymer, and ethylene-butene copolymer.

In view of the writing feeling, the polyolefin wax preferably has a softening point of 100 to 130°C and a penetration of 10 or less. If the penetration is more than 10, the solid writing material is so soft that it is difficult to use for writing and further so that handwriting blurs and expands (the wax spreads out to form a thin layer) to stain blank areas of the writing surface or to damage another sheet by stain or color migration when intended to be decolored by rubbing. On the other hand, if the penetration is less than 1.5, the solid writing material is so hard that handwriting is too thin to recognize visually. Accordingly, the penetration is particularly preferably about 1.5 to 7 so as to obtain favorable strength and writing touch feeling in good balance.

The penetration is determined according to the regulation of JIS K2207. Specifically, a needle having a regulated weight is stuck perpendicularly into the polyolefin wax at a temperature of 25°C with a load of 100 g for a penetration time of 5 seconds, and the sinking length of the needle is regarded as the penetration. The penetration value of 1 corresponds to 0.1 mm. Accordingly, the smaller the penetration is, the harder the polyolefin wax is. The larger the penetration is, the softer the polyolefin wax is.

Concrete examples of the waxes usable in the present invention include: Neowax series ([trademark], manufactured by YASUHARA CHEMICAL Co., Ltd.), SUNWAX series ([trademark], manufactured by SANYO KASEI Co., Ltd.), HI-WAX series ([trademark], manufactured by Mitsui Chemicals, Inc.), and A-C polyethylene series ([trademark], manufactured by Honeywell).

Among the above polyethylene waxes, an acid-modified polyethylene wax is preferred. Since having proper viscosity (elasticity), the acid-modified polyethylene wax is thought to absorb frictional resistance in writing. Since the writing friction is reduced to improve writing feeling, the acid-modified polyethylene wax makes the writing material more useful in the form of a crayon or a pencil for applying to a coloring book page.

Concrete examples of the acid-modified polyethylene wax include: Neowax LAOS ([trademark], manufactured by YASUHARA CHEMICAL Co., Ltd.), AC-573 and -575 ([trademark], manufactured by Honeywell), and HI-WAX 1105A and 2203A ([trademark], manufactured by Mitsui Chemicals, Inc.).

When polyolefin wax is used as a excipient, the content thereof is preferably 0.2 to 70 wt% based on the total weight of the solid writing material. If the content is smaller than that range, the solid writing material tends to have insufficient strength. On the other hand, if the content is larger than the above range, it is often difficult to obtain satisfying handwriting density. The content is preferably 0.5 to 40 wt% so that both the handwriting density and the strength of the writing material may be favorable.

According to necessity, the solid writing material of the present invention can contain various other additives, such as, filler viscosity adjusting agents, anti-mold agents, preservatives, antibacterial agents, and flavors. As the fillers, any conventionally known filler can be adopted. Examples of the fillers include: talc, clay, silica, calcium carbonate, barium sulfate, alumina, mica, boron nitride, potassium titanate, glass flake, and starch. In view of the formability, talc and calcium carbonate are preferred. The fillers are incorporated so as to improve the solid writing material of the present invention in strength and to control the writing feeling.

The solid writing material can contain any desirable (non-thermochromic) dye or pigment so that color changing (discoloration) may occur from one chromatic color to another.

When the above-described hindered amine compound is incorporated, the content thereof is preferably 0.1 to 5 wt% based on the total weight of the solid writing material. Specifically, if being in the form of a crayon, the solid writing material preferably contains the component (a) in an amount of 10 to 60 wt%, preferably 20 to 50 wt%; the excipient in an amount of 30 to 70 wt%, preferably 40 to 70 wt%; the filler in an amount of 5 to 30 wt%; and the hindered amine compound in an amount of 0.1 to 5 wt%, based on the total weight of the writing material. If being in the form of a pencil or mechanical pencil lead, the solid writing material preferably contains the component (a) in an amount of 10 to 60 wt%, preferably 20 to 50 wt%; the excipient in an amount of 10 to 40 wt%; the filler in an amount of 10 to 70 wt%, preferably 20 to 60 wt%; and the hindered amine compound in an amount of 0.1 to 5 wt%, based on the total weight of the writing material.

The solid writing material can be formed in a desired shape and directly used as a writing instrument. However, the cylindrical surface thereof can be covered with paper or with a resin layer so as to serve as a holder part. The writing material formed in the shape of a rod having a desired diameter can be used as a pencil lead encased in a wood- or resin-made barrel or as a feeding type writing instrument encased in a cylindrical holder equipped with feeding mechanism.

The solid writing material of the present invention can be applied to various writing surfaces, and handwriting written with the material can be discolored by friction with fingers, by heating with a heater or by using a cooler.

Examples of the heater include: electrical heat-discoloring apparatus equipped with resistance heater, heat-discoloring apparatus filled with hot water or the like, and hair dryer. However, it is preferred to use a friction element as a simple discoloring means.

The solid writing material can be equipped with a friction element to produce a writing instrument of high portability. The friction element may be combined with the solid writing material to produce a stationery suite of the solid writing material. The friction element is preferably an elastic body, such as, an elastomer or plastic foam body, which is rich in elasticity and which can cause friction to generate frictional heat in rubbing the writing surface. The friction element is preferably made of, for example, silicone resin, SEBS resin, and polyester resin.

Examples of the cooler include: cooling-discoloring apparatus employing Peltier device, cooling-discoloring apparatus filled with refrigerant such as cold water or flake ice, ice pack, refrigerator, and freezer.

Since containing the reversibly thermochromic composition of the present invention, the solid writing material of the present invention provides effects that cannot be provided by conventional solid writing materials. Specifically, although handwriting written with a conventional solid writing material is often partly decolored or discolored, the solid writing material of the present invention makes it possible to form handwriting without lowering the coloring density.

The present invention is further explained by use of the following examples, but they by no means restrict the present invention.

### Examples 101 to 106 and Comparative examples 101 to 106

The following table shows compositions of the solid writing materials in Examples and Comparative examples. The values in the table are in terms of weight parts. The size of the microcapsule pigment is a mean particle size (median diameter) calculated based on the volume standard from values measured by means of laser scattering particle distribution analyzer LA-300 ([trademark], manufactured by HORIBA Ltd.).

**Table 1**

| | | Examples | | | | | | | | Comparative examples | | |
|---|---|---|---|---|---|---|---|---|---|---|---|---|
| | Ref. | 101 | 102 | 103 | 104 | 105 | 106 | 107 | 108 | 101 | 102 | 103 |
| Blue microcapsule pigment | (1) | 30.0 | | | 40.0 | | | | | 30.0 | | |
| Pink microcapsule pigment | (2) | | 20.0 | | | 30.0 | | 20.0 | | | | |
| Black microcapsule pigment | (3) | | | 40.0 | | | 25.0 | | 40.0 | | 25.0 | 25.0 |
| Polyolefin wax A | (4) | 12.5 | | 10.0 | | | | | | | | |
| Polyolefin wax B | (5) | | 21.0 | | | | 14.0 | | | | | 28.0 |
| Polyolefin wax C | (6) | | | | 12.0 | | | | | | 28.0 | |
| Polyolefin wax D | (7) | | | | | 12.5 | | | | | | |
| Microcrystalline wax | (8) | | | | | | | 30.0 | | | | |
| Sucrose fattv acid ester A | (9) | 12.5 | | | | | 14.0 | | | | | |
| Sucrose fatty acid ester B | (10) | | 9.0 | | 8.0 | | | | | | | |
| Dextrin fattv acid ester | (11) | | | 10.0 | | 12.5 | | | 20.0 | | | |
| Hindered amine | (12) | | 1.2 | 1.5 | 1.0 | 1.2 | 1.0 | 1.2 | 1.5 | | 1.0 | 1.0 |
| Polyvinyl alcohol | | 2.0 | 2.2 | 1.5 | 2.0 | 2.2 | 2.0 | 2.2 | 1.5 | 2.0 | 2.0 | 2.0 |
| Wood wax | | 0.6 | 1.0 | 0.5 | 1.0 | 1.0 | | 1.0 | 0.5 | 30.0 | | |
| Talc | | 42.4 | 45.6 | 36.5 | 36.0 | 40.6 | 44.0 | 45.6 | 36.5 | 38.0 | 44.0 | 44.0 |
| Total | | 100.0 | 100.0 | 100.0 | 100.0 | 100.0 | 100.0 | 100.0 | 100.0 | 100.0 | 100.0 | 100.0 |

The ingredients shown in the above table are individually explained below according to the reference numbers.
(1): reversibly thermochromic microcapsule pigment (T₁: -16°C, T₂: -8°C, T₃: 48°C, T₄: 58°C, ΔH: 65°C, mean particle size: 2.5 µm, ratio of reversibly thermochromic composition:wall membrane = 2.6:1.0, discoloration: blue to colorless), enclosing a color-memorable reversibly thermochromic composition of heat-decoloring type
   comprising
   1.5 parts of 4,5,6,7-tetrachloro-3-[4-(diethyl-amino)-2-methylphenyl]-3-[1-ethyl-2-methyl-1H-indole-3-yl]-1( 3H)-isobenzofuranone as the component (a1),
   5.0 parts of 2,2-bis(4'-hydroxyphenyl)hexafluoropropane as the component (a2),
   3.0 parts of 4,4'-(2-methylpropylidenebisphenol, and
   50.0 parts of 4-benzyloxyphenylethyl caprate as the component (a3);
(2): reversibly thermochromic microcapsule pigment (T₁: -20°C, T₂: -10°C, T₃: 48°C, T₄: 58°C, ΔH: 68°C, mean particle size: 2.3 µm, ratio of reversibly thermochromic composition:wall membrane = 2.6:1.0, discoloration: pink to colorless), enclosing a color-memorable reversibly thermochromic composition of heat-decoloring type
   comprising
   1.0 part of 2-(dibutylamino)-8-(dipentylamino)-4-methyl-spiro[5H-[1] benzopyrano[2,3-g] pyrimidine-5,1'-(3'H)-isobenzofuran]-3-one as the component (a1),
   3.0 parts of 4,4'-bis(2-ethylhexane-1,1-diyl)di-phenol as the component (a2),
   5.0 parts of 2,2-bis(4'-hydroxyphenyl)hexafluoropropane, and
   50.0 parts of 4-benzyloxyphenylethyl caprate as the component (a3);
(3): reversibly thermochromic microcapsule pigment (T₁: -8°C, T₂: -1°C, T₃: 52°C, T₄: 65°C, ΔH: 63°C, mean particle size: 3.0 µm, ratio of reversibly thermochromic composition: wall membrane = 2.6:1.0, discoloration: black to colorless), enclosing a color-memorable reversibly thermochromic composition of heat-decoloring type
   comprising
   5 parts of 2-(2-chloroanilino)-6-di-n-butylamino-fluoran as the component (a1),
   5 parts of 2,2-bis(4'-hydroxyphenyl)hexafluoropropane as the component (a2),
   3 parts of 4,4'-(2-methylpropylidene)bisphenol, and
   50 parts of 4-benzyloxyphenylethyl laurate as the component (a3);
(4): HI-WAX 1105A ([trademark], manufactured by Mitsui Chemicals, Inc.) (softening point: 108°C, penetration: 6);
(5): Neowax LA05 ([trademark], manufactured by YASUHARA CHEMICAL Co., Ltd.) (softening point: 105°C, penetration: 4.5);
(6): SUNWAX 131-P ([trademark], manufactured by SANYO KASEI Co., Ltd.) (softening point: 110°C, penetration: 3.5);
(7): VYBAR103POLYMER ([trademark], manufactured by BAKER HUGHES) (softening point: 70°C, penetration: 5.5);
(8): Hi-Mic-1045 ([trademark], manufactured by NIPPON SEIRO CO., LTD.) (softening point: 72°C, penetration: 37);
(9): RYOTO SUGAR ESTER P-170 ([trademark], manufactured by MITSUBISHI-KAGAKU FOODS COORPORATION);
(10): RYOTO SUGAR ESTER S-370 ([trademark], manufactured by MITSUBISHI-KAGAKU FOODS COORPORATION);
(11): RHEOPEARL MKL ([trademark], manufactured by Chiba Flour Milling Co., Ltd.); and
(12): TINUVIN 765 ([trademark], manufactured by BASF).

### Production of solid writing material

The ingredients were added into the polyethylene wax, and heated to melt and mix. The product was then formed by extrusion to obtain a solid writing material (pencil lead).

### Production of sample pencil

The solid writing material obtained in the form of a pencil lead was encased in a wooden barrel to produce a sample pencil.

After cooled to -20°C or below to develop color, the solid writing material was applied to paper. As a result of that, handwriting was successfully formed. The handwriting was then rubbed with a friction element made of SEBS resin, and thereby successfully erased (decolored).

Sample pencils were produced from the solid writing materials obtained in the above Examples and Comparative examples, and were evaluated in terms of handwriting density in overlaying application and also in terms of writing feeling and erasability. Each sample pencil was applied to white wood-free paper to form handwriting.

For evaluating the handwriting density in overlaying application, each pencil was ten times repeatedly applied (with a load of 300 g) to an area of 1.5 cm width and 0.5 cm length and then the formed handwriting was visually observed.

The writing feeling was evaluated by how smoothly the handwriting was formed on the paper.

For evaluating the erasability, handwriting formed on the paper was rubbed and decolored with a friction element made of SEBS resin, and then the rubbed part was observed.

**Table 2**

| | Examples | | | | | | | | Comparative Examples | | |
|---|---|---|---|---|---|---|---|---|---|---|---|
| | 101 | 102 | 103 | 104 | 105 | 106 | 107 | 108 | 101 | 102 | 103 |
| Handwriting density in overlaying application | A | A | A | A | A | A | B | B | B | C | C |
| Writing feeling | A | A | A | B | B | A | A | A | A | C | B |
| Erasability | A | A | A | A | A | A | C | C | C | A | A |

The grades of each evaluation shown in the table are explained below.

### Handwriting density in overlaying application

A: the handwriting was excellent in visual recognizability, and light and shade areas were successfully made;
B: the handwriting was excellent in visual recognizability but partly decolored, and light and shade areas were insufficiently made; and
C: the handwriting was too thin to visually recognize and partly decolored, and light and shade areas were not made.

### Writing feeling

A: the handwriting was formed with very smooth writing feeling;
B: the writing feeling slightly lacked smoothness; and
C: the writing feeling lacked smoothness.

### Erasability

A: the handwriting was easily rubbed and clearly decolored; and
C: the friction element slipped on the handwriting and failed to erase it, and the handwriting blurred and expanded to stain the paper.

The results indicate that all the solid writing materials of the present invention realize excellent handwriting density and writing feeling.

### Application example A: production of solid writing instrument

The solid writing materials obtained in Examples 101 to 103 were set in feeding-type cylindrical plastic cases, to produce solid writing instruments. The cases were equipped with friction elements made of SEBS resin on the rear ends.

The solid writing instruments successfully formed clear handwriting on paper, and also succeeded in making light and shade by overlaying application. Further, the handwriting was successfully erased without leaving residual images by rubbing with the friction elements provided on the rear ends of the cases. Thus, since equipped with the friction elements, those writing instruments were excellent in portability.

### Application example B: production of stationery suite

The pencils comprising the solid writing materials of Examples 101 to 103 were combined with SEBS resin-made friction elements, to produce stationery suites.

The stationery suites were successfully used for forming clear handwriting on paper and also for making light and shade by overlaying application with the solid writing materials. Further, the handwriting was successfully erased without leaving residual images by rubbing with the attached friction elements. Thus, since comprising the writing instruments and the friction elements in combination, those stationery suites made both writing and erasing easy and hence were very convenient.

### Preparation of microcapsules

### (production of thermochromic microcapsule A)

A color-memorable reversibly thermochromic composition (component (a)) comprising: 2.5 weight parts of 1,3-dimethyl-6-diethylaminofluoran as the component (a1), 5.0 weight parts of 2,2-bis(4'-hydroxyphenyl)hexafluoropropane as the component (a2), 3.0 weight parts of 1,1-bis(4'-hydroxyphenyl)n-decane, and 50.0 parts of 4-benzyloxyphenylethyl caprate (melting point: 63°C) as the component (a3); was heated, dissolved and mixed with 30.0 weight parts of aromatic isocyanate prepolymer as the wall membrane material and 40.0 weight parts of co-solvent, to prepare a solution. The solution was emulsified and dispersed in an 8% aqueous solution of polyvinyl alcohol. After the emulsion was kept heated and stirred, 2.5 weight parts of water-soluble aliphatic denatured amine was added therein. The liquid was further stirred to obtain a suspension of thermochromic microcapsules. The suspension was subjected to centrifugal separation to isolate the thermochromic microcapsules. The microcapsules had a mean particle size of 2.0 µm, behaved according to a hysteresis property of t₁: -20°C, t₂: -10°C, t₃: 45°C, t₄: 64°C, Δ(t₄-t₃): 19°C, and reversibly discolored from orange to colorless or from colorless to orange.

### Production of thermochromic microcapsule B

A color-memorable reversibly thermochromic composition comprising: 2.0 weight parts of 3-(4-di-methylamino-2-hexyloxyphenyl)-3-(1-ethyl-2-methylindole-3-yl)-4-azaphalide as the component (a1), 8.0 weight parts of 1,1-bis(4'-hydroxyphenyl)n-decane as the component (a2), and 50.0 parts of 4-benzyloxyphenylethyl laurate (melting point: 70°C) as the component (a3); was heated, dissolved and mixed with 30.0 weight parts of aromatic isocyanate prepolymer as the wall membrane material and 40.0 weight parts of co-solvent, to prepare a solution. The solution was emulsified and dispersed in an 8% aqueous solution of polyvinyl alcohol. After the emulsion was kept heated and stirred, 2.5 weight parts of water-soluble aliphatic denatured amine was added therein. The liquid was further stirred to obtain a suspension of thermochromic microcapsules. The suspension was subjected to centrifugal separation to isolate the thermochromic microcapsules. The microcapsules had a mean particle size of 4.0 µm, behaved according to a hysteresis property of t₁: -2°C, t₂: 6°C, t₃: 56°C, t₄: 70°C, Δ(t₄-t₃): 14°C, and reversibly discolored from blue to colorless or from colorless to blue.

### Production of thermochromic microcapsule C

A color-memorable reversibly thermochromic composition comprising: 2.0 weight parts of 3-(4-di-ethylamino-2-hexyloxyphenyl)-3-(1-ethyl-2-methylindole-3-yl)-4-azaphalide as the component (a1), 4.0 weight parts of 1,1-bis(4'-hydroxyphenyl)hexafluoropropane as the component (a2), 4.0 weight parts of 1,1-bis(4'-hydroxyphenyl)n-decane, and 50.0 parts of 4-benzyloxyphenylethyl caprylate (melting point: 57°C) as the component (a3); was heated, dissolved and mixed with 30.0 weight parts of aromatic isocyanate prepolymer as the wall membrane material and 40.0 weight parts of co-solvent, to prepare a solution. The solution was emulsified and dispersed in an 8% aqueous solution of polyvinyl alcohol. After the emulsion was kept heated and stirred, 2.5 weight parts of water-soluble aliphatic denatured amine was added therein. The liquid was further stirred to obtain a suspension of thermochromic microcapsules. The suspension was subjected to centrifugal separation to isolate the thermochromic microcapsules. The microcapsules had a mean particle size of 3.0 µm, behaved according to a hysteresis property of t₁: -24°C, t₂: -10°C, t₃: 42°C, t₄: 55°C, Δ(t₄-t₃): 13°C, and reversibly discolored from blue to colorless or from colorless to blue.

### Production of endothermic microcapsule a

Myristyl alcohol (melting point: 40°C) in an amount of 10 weight parts was heated, dissolved, emulsified and dispersed in a 5% aqueous solution of methyl vinyl ether-maleic acid anhydride copolymer. After the emulsion was kept heated and stirred, 20 weight parts of melamine-formaldehyde initial condensate was gradually dropped therein. The liquid was further stirred to obtain a suspension of endothermic microcapsules. The suspension was subjected to centrifugal separation to isolate the endothermic microcapsules. The microcapsules showed an endothermic peak at 42.6°C, and had a mean particle size of 5.0 µm.

### Production of endothermic microcapsules b to k

The endothermic microcapsules b to k used in the present invention were so prepared that their wall membranes, component (4) enclosed in the microcapsules, and mean particle sizes might be as shown in Table 3.

**Table 3**

| Endothermic microcapsule | Endothermic phase-change compound (bii) | Melting point (°C) | Endothermic temperature (°C) | Microcapsule wall membrane material | Mean particle size (*µ*m) |
|---|---|---|---|---|---|
| a | myristyl alcohol | 40 | 42 | melamine-formaldehyde condensed membrane | 5.0 |
| b | lauric acid | 44 | 45 | melamine-formaldehyde condensed membrane | 4.2 |
| c | methyl stearate | 37 | 37 | melamine-formaldehyde condensed membrane | 4.8 |
| d | decyl alcohol | 7 | 9 | melamine-formaldehyde condensed membrane | 3.2 |
| e | lauric acid | 44 | 45 | melamine-formaldehyde condensed membrane | 5.3 |
| f | N-oleyloleic acid amide | 35 | 35 | urethane | 5.0 |
| g | methyl stearate | 37 | 37 | urethane | 4.4 |
| h | myristyl myristate | 46 | 42 | urethane | 2.8 |
| i | myristyl alcohol | 40 | 42 | epoxy | 5.2 |
| j | methyl stearate | 37 | 37 | epoxy | 6.7 |
| k | behenic acid | 81 | 75 | melamine-formaldehyde condensed membrane | 5.1 |

### Example 201

### (Production of reversibly thermochromic composition)

| | |
|---|---|
| thermochromic microcapsule A | 18 weight parts |
| myristyl alcohol (endothermic phase-change compound) | 20 weight parts |
| deionized water | 32 weight parts |

The above ingredients were mixed and kept stirred with a magnetic stirrer to be homogeneous. The obtained mixture was dried at room temperature to obtain the reversibly thermochromic composition 201.

### Examples 202 to 211

The procedure of Example 201 was repeated except that the thermochromic microcapsules and endothermic microcapsules individually shown in Table 4 were used in place of the thermochromic microcapsule A and myristyl alcohol, respectively, to obtain each reversibly thermochromic composition.

### Comparative examples 201 to 203

The procedure of Example 201 was repeated except that the ingredients shown in Table 4 were used, to obtain each reversibly thermochromic composition.

**Table 4**

| | | Examples | | | | | | | | | | | Comparative exmples | | |
|---|---|---|---|---|---|---|---|---|---|---|---|---|---|---|---|
| | | 201 | 202 | 203 | 204 | 205 | 206 | 207 | ' 208 | 209 | 210 | 211 | 201 | 202 | 203 |
| | | Revers. thermochromic comp. 201 | Revers. thermochromic comp. 202 | Revers. thermochromic camp. 203 | Revers. thermochromic comp. 204 | Revers. thermochromic comp. 205 | Revers. thermochromic comp. 206 | Revers. thermochromic comp. 207 | Revers. thermochromic comp. 208 | Revers. thermochromic comp 209 | Revers. thermochromic comp. 210 | Revers. thermochromic comp. 211 | Revers. thermochromic comp. 212 | Revers. thermochromic comp. 213 | Revers. thermochromic comp. 214 |
| Thermochromic microcapsule | A | 18 | 18 | | | 18 | 18 | 18 | 18 | 18 | 18 | 18 | 18 | 100 | |
| | B | | | 18 | | | | | | | | | | | 100 |
| | C | | | | 18 | | | | | | | | | | |
| Endothermic microcapsule | a | | 20 | | | | | | | | | | | | |
| | b | | | | | 20 | | | | | | | | | |
| | c | | | | | | 20 | | | | | | | | |
| | d | | | | | | | 20 | | | | | | | |
| | e | | | | | | | | 20 | | | | | | |
| | f | | | | | | | | | 20 | | | | | |
| | g | | | | 20 | | | | | | | | | | |
| | h | | | 20 | | | | | | | | | | | |
| | i | | | | | | | | | | 20 | | | | |
| | j | | | | | | | | | | | 20 | | | |
| | k | | | | | | | | | | | | 20 | | |
| Myristyl alcohol | | 20 | | | | | | | | | | | | | |
| Decoloration beginning temperature t₃/°C | | 56 | 58 | 60 | 48 | 59 | 56 | 50 | 58 | 55 | 58 | 56 | 45 | 45 | 56 |
| Completely decoloring temperature t₄/°C | | 64 | 64 | 70 | 55 | 64 | 64 | 64 | 64 | 64 | 64 | 64 | 64 | 64 | 70 |
| Δ(t₄-t₃)/°C | | 8 | 6 | 10 | 7 | 5 | 8 | 14 | 6 | 9 | 6 | 8 | 19 | 19 | 14 |

### Production of sample for testing discoloration behavior

In order to test thermochromic behavior of the reversibly thermochromic composition obtained in Example 201, a sample was produced in the following manner.

| | |
|---|---|
| reversibly thermochromic composition obtained in Example 201 | 38 weight parts |
| ethylene-vinyl acetate emulsion (Sumikaflex 500, [trademark], manufactured by Sumika Chemtex Co., Ltd.) | 3 weight part |
| deionized water | 32 weight parts |

The above ingredients were mixed and kept stirred with a magnetic stirrer to be homogeneous. The obtained mixture was applied to wood-free paper to print a circle of predetermined size by screen process printing and then dried at room temperature, to produce a sample for testing the thermochromic behavior.

### Production of samples for testing discoloration behavior

The above procedure was repeated except for using the reversibly thermochromic compositions obtained in Examples 202 to 211 and Comparative examples 201 to 203, to produce samples for testing the thermochromic behavior.

### Test of discoloration behavior

The above samples were heated and cooled to test discoloration behavior in the following manner.

Each sample was mounted at a particular position on a color-difference meter (Color Difference Meter TC-3600 [trademark], Tokyo Denshoku CO.,LTD.), and heated and cooled at a rate of 10°C/minute in the temperature range 0 to 100°C to measure color density. With respect to each sample, Table 4 shows the measurement results of decoloration beginning temperature t₃, completely decoloring temperature t₄, and difference between them Δ(t₄-t₃).

As evident from the results in Table 4, the reversibly thermochromic composition of the present invention had a decoloration beginning temperature t₃ shifted to higher temperature, as compared with a conventional reversibly thermochromic composition containing thermochromic microcapsules alone. Further, as shown in Comparative example 1, if the component (bii) is an endothermic phase-change compound having a higher melting point than that of the compound (a3), the decoloration beginning temperature is the same as in the case where thermochromic microcapsules are alone used. It is thus clear that the reversibly thermochromic composition of the present invention is excellent in discoloration property.

### Reference Example 212

### (Preparation of writing ink composition)

| | |
|---|---|
| thermochromic microcapsule A | 18 weight parts |
| endothermic microcapsule a | 20 weight parts |
| urea | 10 weight parts |
| glycerin | 10 weight parts |
| phosphate surfactant | 0.5 weight part |
| nonionic permeability imparting agent | 0.6 weight part |
| antifoaming agent of modified silicone | 0.1 weight part |
| preservative and fungicide | 0.1 weight part |
| triethanolamine | 0.5 weight part |
| deionized water | 39.9 weight parts |

The above ingredients were heated and stirred with a magnetic hot stirrer to prepare a base ink.

Thereafter, while the prepared base ink was heated, 0.3 weight part of succinoglycan (shear-thinning tackifier) was added therein. The obtained mixture was sufficiently stirred with a homogenizer stirrer to be homogeneous, and then filtrated through a filter to obtain a writing ink composition.

### Reference Example 213

### (Preparation of writing ink composition)

| | |
|---|---|
| thermochromic microcapsule C | 18 weight parts |
| endothermic microcapsule c | 20 weight parts |
| saccharide mixture | 3 weight parts |
| phosphate surfactant | 0.5 weight part |
| preservative and fungicide | 0.1 weight part |
| triethanolamine | 0.5 weight part |
| deionized water | 57.1 weight parts |

The above ingredients were heated and stirred with a magnetic hot stirrer to prepare a base ink.

Thereafter, while the prepared base ink was heated, 0.3 weight part of succinoglycan (shear-thinning tackifier) was added therein. The obtained mixture was sufficiently stirred with a homogenizer stirrer to be homogeneous, and then filtrated through a filter to obtain a writing ink composition.

### Reference Example 214

### (Preparation of writing ink composition)

| | |
|---|---|
| thermochromic microcapsule B | 18 weight parts |
| endothermic microcapsule b | 20 weight parts |
| hydroxyethyl cellulose | 0.5 weight part |
| glycerin | 18 weight parts |
| 10%-aqueous solution of phosphoric acid | 0.1 weight part |
| antifoaming agent of modified silicone | 0.02 weight part |
| preservative and fungicide | 1.5 weight part |
| deionized water | 41.88 weight parts |

The above ingredients were heated and sufficiently stirred with a magnetic hot stirrer to be homogeneous, and then filtrated through a filter to obtain a writing ink composition.

### Reference Comparative examples 204 and 205

The procedure of Reference Example 212 was repeated except that the ingredients shown in Table 5 were used, to prepare writing ink compositions.

### Reference Comparative examples 206 and 207

The procedure of Reference Example 214 was repeated except that the ingredients shown in Table 5 were used, to prepare writing ink compositions.

**Table 5**

| | | Examples | | | Comparative examples | | | |
|---|---|---|---|---|---|---|---|---|
| | | 212 | 213 | 214 | 204 | 205 | 206 | 207 |
| Reversibly thermochromic composition | thermochromic microcapsule A | 18 | | | 25 | 18 | | |
| | thermochromic microcapsule B | | | 18 | | | | |
| | thermochromic microcapsule C | | 18 | | | | 18 | 25 |
| | endothermic microcapsule a | 20 | | | | | | |
| | endothermic microcapsule b | | | 20 | | | | |
| | endothermic microcapsule c | | 20 | | | | | |
| | endothermic microcapsule k | | | | | 20 | 20 | |
| | succinoglycan (shear-thinning tackifier) | 0.3 | 0.3 | | 0.3 | 0.3 | | |
| | hydroxyethyl cellulose (polymer coagulant) | | | 0.5 | | | 0.5 | 0.5 |
| | urea | 10 | | | 10 | | | |
| | glycerin | 10 | | 18 | 10 | | 18 | 18 |
| | phosphate surfactant | 0.5 | 0.5 | | 0.5 | 0.5 | | |
| | 10%-aqueous solution of phosphoric acid | | | 0.1 | | | 0.1 | 0.1 |
| | nonionic permeability imparting agent | 0.6 | | | 0.6 | | | |
| | antifoaming agent of modified silicone | 0.1 | | 0.02 | 0.1 | | 0.02 | 0.02 |
| | fungicide | 0.1 | 0.1 | 1.5 | 0.1 | 0.1 | 1.5 | 1.5 |
| | triethanolamine (pH adjuster) | 0.5 | 1 | 41.88 | 0.5 | 1 | | |
| | saccharide mixture | | 3 | | | 3 | | |
| | deionized water | 39.9 | 57.1 | | 52.9 | 57.1 | 41.88 | 54.88 |
| | total | 100 | 100 | 100 | 100 | 100 | 100 | 100 |
| | writability | A | A | A | A | A | A | A |
| | erasability | A | A | A | A | A | A | A |
| | remaining ability of handwriting on back surface | A | A | A | C | C | C | C |
| | evaluation grade | A | A | A | C | C | C | C |

### Production of writing instrument

A stainless steel-made ballpoint pen tip holding a ball of 0.7 mm diameter was fixed via a resin-made tip holder at one end of a polypropylene-made ink storage tube, and a pressure spring was placed therein. The writing ink composition of Reference Example 212 or of Reference Comparative example 204 was poured therein, and then a grease-like ink backflow prevention body was so provided that it might be in contact with the ink composition on the side opposite to the tip. Thereafter, the tube was subjected to centrifugal treatment to produce a ballpoint pen refill. The ballpoint pen refill was installed in a cylindrical case (which comprised a forward barrel and a rear barrel), and a cap having rubber seal therein was placed to produce a ballpoint pen of, what is called, cap type. On the rear barrel, a SEBS resin-made friction element was provided.

### Production of writing instrument 2

A stainless steel-made ballpoint pen tip holding a ball of 0.7 mm diameter was fixed via a resin-made tip holder at one end of a polypropylene-made ink storage tube, and a pressure spring was placed therein. The writing ink composition of Reference Example 213 or of Reference Comparative example 205 was poured therein, and then a grease-like ink backflow prevention body (ink follower) was so provided that it might be in contact with the ink composition on the side opposite to the tip. Thereafter, the tube was subjected to centrifugal treatment to produce a ballpoint pen refill. The ballpoint pen refill was installed in a cylindrical case, to produce a ballpoint pen of retractable type. Around the opening at the top end of the cylindrical case, a SEBS resin-made friction element was provided.

### Production of writing instrument 3

The writing ink composition of Example 14 or of Reference Comparative example 206 or 207 was absorbed in an ink absorbent in which polyester sliver was covered with a synthetic resin film. The absorbent was then encased in a polypropylene resin-made cylindrical case, and a marking pen tip made of polyester fibers was fixed via a connecting member at the top end of the cylindrical case. Thereafter, a cap having rubber seal therein was placed to produce a marking pen of, what is called, cap type. On the cap, a SEBS resin-made friction element was provided.

By use of the writing instruments produced in the above 1 to 3, the writing ink compositions were evaluated according to the following methods and criteria.

Writability: handwriting was formed on writing paper A with the produced writing instrument, and visually evaluated.
A: the handwriting was sufficiently thick and excellent in visual recognizability;
B: the handwriting was slightly thin but visually recognizable; and
C: the handwriting was too thin to recognize visually.

Erasability: the handwriting evaluated in writability was then rubbed with the friction element of the produced writing instrument, and thereby erasability was visually evaluated.
A: the handwriting was sufficiently decolored and no residual images were left;
B: the handwriting was decolored but residual images were slightly seen;
C: residual images were seen; and
D: the handwriting would not be decolored.

Remaining ability of handwriting on back surface: handwriting was formed on the front surface of writing paper A with the produced writing instrument, and then handwriting was also formed on the back surface with the same writing instrument. Thereafter, the handwriting on the front surface was rubbed and decolored with the friction element of the writing instrument, and then that on the back surface was visually evaluated.
A: the handwriting was not decolored and sufficiently visually recognizable;
B: the handwriting was partly decolored and thinned, but recognizable;
C: the handwriting was decolored and visually unrecognizable.

As evident from the results in Table 6, the writing ink compositions comprising the reversibly thermochromic composition of the present invention were excellent in writability and erasability. Further, the handwriting written in the ink compositions of the present invention was not decolored by frictional heat generated by rubbing the paper surface on the opposite side. In contrast, the ink compositions of Reference Comparative examples 204 to 207 were satisfactory in erasability but poor in remaining ability of handwriting on the back surface. It is thus clear that the writing ink composition of the present invention is excellent in writing and erasing properties.

### Example 215: Production of solid writing material

| | |
|---|---|
| thermochromic microcapsule A | 18 weight parts |
| endothermic microcapsule a | 20 weight parts |
| polyethylene wax | 62 weight parts |

The above ingredients were kneaded with a kneader, and then the kneaded material was subjected to compression molding by a press to produce a solid writing material of outer diameter Φ: 3 mm and length: 60 mm.

### Examples 216 to 218

The procedure of Example 215 was repeated except for using the ingredients shown in Table 6, to produce solid writing materials.

### Comparative examples 208 to 210

The procedure of Example 215 was repeated except for using the ingredients shown in Table 6, to produce solid writing materials.

**Table 6**

| | Examples | | | | Comparative examples | | |
|---|---|---|---|---|---|---|---|
| | 215 | 216 | 217 | 218 | 208 | 209 | 210 |
| Thermochromic microcapsule A | 18 | | | | 20 | | |
| Thermochromic microcapsule B | | 20 | | | | 25 | |
| Thermochromic microcapsule C | | | 20 | 25 | | | 25 |
| Endothermic microcapsule a | 20 | | | | | | |
| Endothermic microcapsule d | | | 20 | | | | |
| Endothermic microcapsule g | | | | 20 | | | |
| Endothermic microcapsule j | | 25 | | | | | |
| Endothermic microcapsule k | | | | | 20 | | |
| Polyethylene wax | 62 | 20 | 40 | 25 | 60 | 50 | 50 |
| Wood wax | | 13 | | | | | |
| Polyvinyl alcohol | | 5 | | | | 5 | 5 |
| Talc (body material) | | 17 | 20 | 30 | | 20 | 20 |
| Writing feeling | A | A | A | A | B | A | A |
| Writability | A | A | A | A | B | B | B |
| Erasability | A | A | A | A | A | A | A |
| Evaluation grade | A | A | A | A | C | C | C |

The sold writing materials produced in Examples 215 to 218 and Comparative examples 208 to 210 were evaluated according to the following methods and criteria, and the results were shown in Table 6.

Writing feeling: the solid writing material was applied to writing paper A to form handwriting, and writing feeling at that time was sensorily evaluated.
A: the writing feeling was smooth and excellent;
B: the writing feeling was smooth but slightly rigid; and
C: the writing feeling was rigid.

Writability: handwriting was formed on writing paper A with the produced solid writing material, and the density thereof was visually evaluated.
A: the handwriting was sufficiently thick and excellent in visual recognizability;
B: the handwriting was slightly decolored to be thin but visually recognizable; and
C: the handwriting was decolored and too thin to recognize visually.

Erasability: the handwriting evaluated in writability was then rubbed with a friction element made of SEBS, and thereby erasability was visually evaluated.
A: the handwriting was sufficiently decolored and no residual images were left;
B: the handwriting was decolored but residual images were slightly seen;
C: residual images were seen; and
D: the handwriting would not be decolored.

As evident from the results in Table 6, the solid writing materials comprising the reversibly thermochromic composition of the present invention were excellent in writing feeling, writability and erasability. In contrast, the solid writing materials of Comparative examples 208 to 210 were satisfactory in erasability but poor in writability because the handwriting thereof was found to be thinned by frictional heat generated in writing. It is thus clear that the solid writing material of the present invention is excellent in writing property.

The above evaluation results obviously indicated that the reversibly thermochromic composition of the present invention and the writing ink composition and solid writing material employing that thermochromic composition are excellent in coloring-decoloring property, as compared with conventional products.

### Production of thermochromic microcapsule D

A color-memorable reversibly thermochromic composition comprising: 1.5 parts of 4,5,6,7-tetra-chloro-3-[4-(dimethylamino)-2-methylphenyl]-3-(1-ethyl-2-methyl-1H-indole-3-yl)-1(3H)-isobenzofuranone as the component (a1), 5.0 parts of 2,2-bis(4'-hydroxyphenyl)hexafluoropropane as the component (a2), 3.0 parts of 4,4'-(2-methylpropylidenebisphenol, and 50.0 parts of 4-benzyloxyphenylethyl caprate (melting point: 63°C) as the component (a3); was heated, dissolved and mixed with 30.0 weight parts of aromatic isocyanate prepolymer as the wall membrane material and 40.0 weight parts of co-solvent, to prepare a solution. The solution was emulsified and dispersed in an 8% aqueous solution of polyvinyl alcohol. After the emulsion was kept heated and stirred, 2.5 weight parts of water-soluble aliphatic denatured amine was added therein. The liquid was further stirred to obtain a suspension of thermochromic microcapsules. The suspension was subjected to centrifugal separation to isolate the thermochromic microcapsules. The microcapsules had a mean particle size of 2.2.5 µm, behaved according to a hysteresis property of t'₁: -16°C, t'₂: -8°C, t'₃: 48°C, t'₄: 58°C, ΔH: 65°C, Δ(t'₄-t'₃): 10°C, and reversibly discolored from blue to colorless or from colorless to blue.

### Production of thermochromic microcapsule E

A color-memorable reversibly thermochromic composition comprising: 1.0 part of 2-(dibutylamino)-8-(dipentylamino)-4-methyl-spiro [5H-(1)benzo-pyrano[2,3-g]pyrimidine-5,1'(3'H)isobenzofuran]-3-one as the component (a1), 3.0 parts of 4,4'-(2-ethylhexane-1,1-diyl)di-phenol as the component (a2), 5.0 parts of 2,2-bis(4'-hydroxyphenyl)hexafluoropropane, and 50.0 parts of 4-benzyloxyphenylethyl caprate (melting point: 63°C) as the component (a3); was heated, dissolved and mixed with 30.0 weight parts of aromatic isocyanate prepolymer as the wall membrane material and 40.0 weight parts of co-solvent, to prepare a solution. The solution was emulsified and dispersed in an 8% aqueous solution of polyvinyl alcohol. After the emulsion was kept heated and stirred, 2.5 weight parts of water-soluble aliphatic denatured amine was added therein. The liquid was further stirred to obtain a suspension of thermochromic microcapsules. The suspension was subjected to centrifugal separation to isolate the thermochromic microcapsules. The microcapsules had a mean particle size of 2.3 µm, behaved according to a hysteresis property of t'₁: -20°C, t'₂: -10°C, t'₃: 48°C, t'₄: 58°C, ΔH: 68°C, Δ(t'₄-t'₃): 10°C, and a ratio of reversibly thermochromic composition: wall membrane = 2.6:1.0, and reversibly discolored from pink to colorless or from colorless to pink.

### Production of thermochromic microcapsule F

A color-memorable reversibly thermochromic composition comprising: 5 parts of 2-(2-chloroanilino)-6-di-n-butylaminofluoran as the component (a1), 5 parts of 2,2-bis(4'-hydroxyphenyl)hexafluoropropane, 3.0 parts of 4,4'-(2-methylpropylidene)bisphenol, and 50.0 parts of 4-benzyloxyphenylethyl laurate (melting point: 70°C) as the component (a3); was heated, dissolved and mixed with 30.0 weight parts of aromatic isocyanate prepolymer as the wall membrane material and 40.0 weight parts of co-solvent, to prepare a solution. The solution was emulsified and dispersed in an 8% aqueous solution of polyvinyl alcohol. After the emulsion was kept heated and stirred, 2.5 weight parts of water-soluble aliphatic denatured amine was added therein. The liquid was further stirred to obtain a suspension of thermochromic microcapsules. The suspension was subjected to centrifugal separation to isolate the thermochromic microcapsules. The microcapsules had a mean particle size of 3.0 µm, behaved according to a hysteresis property of t'₁: -8°C, t'₂: -1°C, t'₃: 52°C, t'₄: 65°C, ΔH: 63°C, Δ(t₄-t₃): 13°C, and a ratio of reversibly thermochromic composition:wall membrane = 2.6:1.0, and reversibly discolored from black to colorless or from colorless to black.

### Production of endothermic microcapsule m

Myristyl alcohol (melting point: 40°C) in an amount of 10 weight parts was heated, dissolved, emulsified and dispersed in a 5% aqueous solution of methyl vinyl ether-maleic acid anhydride copolymer. After the emulsion was kept heated and stirred, 20 weight parts of melamine-formaldehyde initial condensate was gradually dropped therein. The liquid was further stirred to obtain a suspension of endothermic microcapsules. The suspension was subjected to centrifugal separation to isolate the endothermic microcapsules. The microcapsules showed an endothermic peak at 42.6°C, and had a mean particle size of 5.0 µm.

### Production of endothermic microcapsules n to q

With respect to the endothermic microcapsules n to q used in the following examples, their wall membranes, components (bii) enclosed in the microcapsules, and mean particle sizes were shown in Table 7.

**Table 7**

| | Endothermic phase-change compound (bii) | Melting point (°C) | Endothermic temperature (°C) | Microcapsule wall membrane material | Mean particle size (*µ*m) |
|---|---|---|---|---|---|
| Endothermic microcapsule m | myristyl alcohol | 40 | 42 | melamine-formaldehyde condensed membrane | 5.0 |
| Endothermic microcapsule n | lauric acid | 44 | 45 | melamine-formaldehyde condensed membrane | 4.2 |
| Endothermic microcapsule o | N-oleyloleic acid amid e | 35 | 35 | urethane | 5.0 |
| Endothermic microcapsule p | methyl stearate | 37 | 37 | epoxy | 6.7 |
| Endothermic microcapsule q | behenic acid | 81 | 75 | melamine-formaldehyde condensed membrane | 5.1 |

### Example 301: Production of solid writing material

| | |
|---|---|
| microcapsule pigment D | 30 weight parts |
| endothermic microcapsule m | 25 weight parts |
| polyethylene wax I (SUNWAX 131-P ([trademark], manufactured by SANYO KASEI Co., Ltd.; softening point: 110°C, penetration: 3.5) | 12.5 weight parts |
| sucrose fatty acid ester i (RYOTO SUGAR ESTER P-170 ([trademark], manufactured by MITSUBISHI-KAGAKU FOODS COORPORATION) | 8 weight parts |
| hindered amine (TINUVIN 765 [trademark], manufactured by BASF) | 1.5 weight parts |
| polyvinyl alcohol | 2 weight parts |
| wood wax | 0.6 weight part |
| talc (filler) | 20.4 weight parts |

The above ingredients were kneaded with a kneader, and then the kneaded material was subjected to compression molding by a press to produce a solid writing material of outer diameter Φ: 3 mm and length: 60 mm.

### Examples 302 to 306

The procedure of Example 1 was repeated except for adopting the ingredients shown in Table 8, to produce solid writing materials.

### Comparative examples 301 to 307

The procedure of Example 1 was repeated except for adopting the ingredients shown in Table 8, to produce solid writing materials.

**Table 8**

| | Examples | | | | | | Comparative examples | | | | | | |
|---|---|---|---|---|---|---|---|---|---|---|---|---|---|
| | 301 | 302 | 303 | 304 | 305 | 306 | 301 | 302 | 303 | 304 | 305 | 306 | 307 |
| Thermochromic microcapsule D | 30 | | | | | | 20 | | | | | | |
| Thermochromic microcapsule E | | 25 | | | | | | 25 | | | | | |
| Thermochromic microcapsule F | | | 20 | 30 | 30 | 35 | | | 35 | 25 | 30 | 30 | 35 |
| Endothermic microcapsule m | 25 | | | | 25 | 25 | | | | 20 | | | 25 |
| Endothermic microcapsule n | | 20 | | | | | | 20 | | | | | |
| Endothermic microcapsule o | | | 20 | | | | | | | | | | |
| Endothermic microcapsule p | | | | 22 | | | | | | | | | |
| Endothermic microcapsule q | | | | | | | 20 | | | | | | |
| Polyolefin wax I (ref.1) | 12.5 | 10 | 12 | 12.5 | | 10 | 20 | 15 | 15 | | 30 | | |
| Polyolefin wax II (ref.2) | | | | | 12.5 | | | | | | | | |
| Sucrose fatty acid aster i (ref.3) | 8 | 14 | | | 12.5 | 8 | 12.5 | | 12.5 | 12.5 | | 20 | |
| Sucrose fatty acid ester ii (ref.4) | | | 9 | | | | | | | | | | |
| Dextrin fatty acid aster (ref.5) | | | | 10 | | | | | | | | | |
| Hindered amine (ref.6) | 1.5 | 1.2 | 1 | 1.5 | 1.5 | | 1.5 | 1.5 | 1.5 | 1.5 | 1.5 | 1.5 | 1.5 |
| Polyvinyl alcohol | 2 | 2 | 2 | 2 | 2 | 1.5 | 2 | 2 | 2 | 2 | 2 | 2 | 2 |
| Wood wax | 0.6 | 1 | 1 | 0.5 | 1 | 0.5 | 1 | 1 | 1 | 20 | 1 | 20 | 15 |
| Talc (body material) | 20.4 | 26.8 | 35 | 21.5 | 15.5 | 20 | 23 | 35.5 | 33 | 19 | 35.5 | 26.5 | 21.5 |
| Total | 100 | 100 | 100 | 100 | 100 | 100 | 100 | 100 | 100 | 100 | 100 | 100 | 100 |

| | | | | | | | | | | | | | |
|---|---|---|---|---|---|---|---|---|---|---|---|---|---|
| (ref. 1): SUNWAX 131-P [trademark], manufactured by SANYO KASEI Co., Ltd. (softening point: 110°C, penetration: 3.5), (ref. 2): VYBAR 103 POLYMER [trademark], manufactured by BAKER HUGHES (softening point: 70°C, penetration: 5.5), (ref. 3): RYOTO SUGAR ESTER P-170 [trademark], manufactured by MITSUBISHI-KAGAKU FOODS COORPORATION, (ref. 4): RYOTO SUGAR ESTER S-370 [trademark], manufactured by MITSUBISHI-KAGAKU FOODS COORPORATION, (ref. 5): RHEOPEARL MKL [trademark], manufactured by Chiba Flour Milling Co., Ltd., (ref. 6): TINUVIN 765 ([trademark], manufactured by BASF. | | | | | | | | | | | | | |

The sold writing materials produced in Examples 301 to 306 and Comparative examples 301 to 307 were evaluated according to the following methods and criteria, and the results were shown in Table 9.

**Table 9**

| | Examples | | | | | | Comparative examples | | | | | | |
|---|---|---|---|---|---|---|---|---|---|---|---|---|---|
| | 301 | 302 | 303 | 304 | 305 | 306 | 301 | 302 | 303 | 304 | 305 | 306 | 307 |
| t₃/°C | 53 | 54 | 58 | 59 | 60 | 60 | 48 | 54 | 52 | 60 | 52 | 52 | 60 |
| t_{4/}°C | 58 | 58 | 65 | 65 | 65 | 65 | 58 | 58 | 65 | 65 | 65 | 65 | 65 |
| Δ(t₄-t₃)/°C | 5 | 4 | 4 | 7 | 6 | 5 | 10 | 4 | 13 | 5 | 13 | 13 | 5 |
| Writing feeling | A | A | A | A | B | A | B | B | B | A | B | A | A |
| Recognizability of handwriting | A | A | A | A | A | A | B | A | A | A | B | A | A |
| Erasability of handwriting | A | A | A | A | A | A | A | A | A | C | A | C | C |
| Overlaying applicability | A | A | A | A | A | A | A | B | A | A | A | A | B |
| Remaining ability of handwriting on back surface | A | A | A | A | A | A | C | A | C | A | C | C | A |
| Evaluation grade | A | A | A | A | A | A | C | C | C | C | C | C | C |

Writing feeling: the solid writing material was applied to writing paper A to form handwriting, and writing feeling at that time was sensorily evaluated.
A: the writing feeling was smooth and excellent;
B: the writing feeling was slightly smooth; and
C: the writing feeling lacked smoothness.

Recognizability of handwriting: the solid writing material was applied to writing paper A to form handwriting, whose density was visually evaluated.
A: the handwriting was sufficiently thick and excellent in visual recognizability;
B: the handwriting was slightly decolored to be thin but visually recognizable; and
C: the handwriting was decolored to be too thin to recognize visually.

Erasability of handwriting: the handwriting evaluated in recognizability was then rubbed with a friction element made of SEBS, and thereby erasability was visually evaluated.
A: the handwriting was easily erased and no residual images were left;
B: the handwriting was erased but residual images were slightly seen;
C: residual images were seen and the handwriting blurred and expanded to stain the paper; and
D: the handwriting would not be erased.

Overlaying applicability: each solid writing material was ten times repeatedly applied (with a load of 300 g) to writing paper A in an area of 1.5 cm width and 0.5 cm length and then the formed handwriting was visually observed.
A: the handwriting was excellent in visual recognizability, and light and shade areas were successfully made;
B: the handwriting was excellent in visual recognizability but partly erased, and light and shade areas were insufficiently made; and
C: the handwriting was too thin to visually recognize and partly erased, and light and shade areas were not made.

Remaining ability of handwriting on back surface: handwriting was formed on the front surface of writing paper A with the produced solid writing material, and then handwriting was also formed on the back surface with the same writing material. Thereafter, the handwriting on the front surface was rubbed and erased with the friction element of the writing instrument, and then that on the back surface was visually evaluated.
A: the handwriting was not erased and sufficiently visually recognizable;
B: the handwriting was partly erased and thinned, but recognizable;
C: the handwriting was erased and visually unrecognizable.

As evident from the results in Table 9, the solid writing materials of the present invention were excellent in writing feeling, recognizability of handwriting, erasability of handwriting, overlaying applicability and remaining ability of handwriting on back surface. In contrast, the solid writing materials of Comparative examples 301 to 307 were inferior to them in one or more of the writing feeling, recognizability of handwriting, erasability of handwriting, overlaying applicability and remaining ability of handwriting on back surface.

The above evaluation results obviously indicated that the solid writing material of the present invention is excellent, as compared with conventional products, in performances as a solid writing material, for example, in coloring-decoloring property.

### INDUSTRIAL APPLICABILITY

The reversibly thermochromic composition of the present invention is usable as a material of various products, such as, printing ink, paint, writing ink composition, solid writing material, colors cosmetics, and coloring liquid like textile dye. Further, examples of other applicable products include: doll or animal-figured toys, hair of doll or animal-figured toys, dollhouses and furniture, doll accessories such as clothing, hats, bags and shoes; child accessories, stuffed toys, drawing toys, picture books for toys, puzzle toys such as jigsaw puzzle; toy building blocks, block toys, clay toys, fluid toys, spinning tops, kites, musical toy instruments, cooking toys, toy guns, hunting toys, background toys, toys imitating vehicles, animals, plants, buildings, foods and the like; clothes, such as, t-shirts, sweat suits, blouses, dress, swimsuits, raincoats and ski wear; footwear, such as, shoes and shoestrings; personal belongings made of cloth, such as, handkerchiefs, towels and cloth wrapper; upholstery, such as, carpets, curtains, curtain tassels, tablecloths, rugs, cushions, picture frames, and imitation flowers; accessories, such as, bracelets, tiaras, earrings, barrettes, fake nails, ribbons, and scarves; stationery, such as, writing instruments, stamps, erasers, desk pads, rulers and adhesive tapes; cosmetics, such as, lipstick, eyeshadow, nail polish, hair dye, fake nails, and paint for fake nails; kitchen utensil, such as, glasses, dishes, chopsticks, spoons, dinner forks, pots, and flying pans; calendars, labels, cards, recording material, various anticounterfeit printings; books, such as, picture books; gloves, neckties, hats and caps, bags, wrapping containers, embroidery thread, sporting goods, fishing tackle, toothbrushes, cocktail coasters, watches and clocks, eyeglasses, lighting instruments, air conditioners, musical instruments, heating pads, refrigerants, photo stands; bags, such as, purses; umbrellas, furniture, vehicles, buildings, thermal indicators, and training tools. The writing ink composition of the present invention can be used in various writing instruments, such as, ink-jet printers, marking pens, ballpoint pens, fountain pens, and brush pens. Further, the solid writing material of the present invention can be used not only for writing instruments but also for thermal indicators or the like.

### DESCRIPTION OF THE REFERENCE LETTERS AND NUMERALS

t₁: completely coloring temperature of microcapsule pigment enclosing a reversibly thermochromic composition of heat-decoloring type,
t₂: coloration beginning temperature of microcapsule pigment enclosing a reversibly thermochromic composition of heat-decoloring type,
t₃: decoloration beginning temperature of microcapsule pigment enclosing a reversibly thermochromic composition of heat-decoloring type,
t₄: completely decoloring temperature of microcapsule pigment enclosing a reversibly thermochromic composition of heat-decoloring type,
T₁: completely decoloring temperature of microcapsule pigment enclosing a reversibly thermochromic composition of heat color-developing type,
T₂: decoloration beginning temperature of microcapsule pigment enclosing a reversibly thermochromic composition of heat color-developing type,
T₃: coloration beginning temperature of microcapsule pigment enclosing a reversibly thermochromic composition of heat color-developing type,
T₄: completely coloring temperature of microcapsule pigment enclosing a reversibly thermochromic composition of heat color-developing type,
ΔH: hysteresis width,
t'₁: completely coloring temperature of a conventional solid writing material of heat-decoloring type,
t'₂: coloration beginning temperature of a conventional solid writing material of heat-decoloring type,
t'₃: decoloration beginning temperature of a conventional solid writing material of heat-decoloring type, and
t'₄: completely decoloring temperature of a conventional solid writing material of heat-decoloring type.

## Claims

1. A solid writing material comprising a reversibly thermochromic composition comprising a combination of
(a) a reversibly thermochromic component containing
(a1) an electron-donative coloring organic compound,
(a2) an electron-accepting compound, and
(a3) a reaction medium for reversibly causing an electron transfer reaction between the components (a1) and (a2) in a specific temperature range; and
(b) a component for controlling heat conducting to the reversibly thermochromic component;
wherein component (b) comprises an endothermic phase-change compound which is always present in a state incompatible with the reversibly thermochromic component (a) and which has a melting point lower than that of the component (a3).

2. The solid writing material according to claim 1, wherein the reversibly thermochromic component (a) is enclosed in microcapsules.

3. The solid writing material according to claim 1 or 2, wherein the component (b) is
(bi) an ester compound selected from the group consisting of sucrose fatty acid esters and dextrin fatty acid esters.

4. The solid writing material according to any of claims 1 to 3, further comprising (c) a polyolefin wax.

5. The solid writing material according to claim 4, wherein the polyolefin wax has a softening point of 100 to 130°C and a penetration of 10 or less.

6. The solid writing material according to claim 5, wherein the polyolefin wax is an acid-modified polyolefin wax.

7. The solid writing material according to claim 1 or 2,
in which the component (b) is (bii) an endothermic phase-change compound;
which reversibly changes between first and second color states whose retention temperature ranges are individually within specific temperature regions; and
which exhibits a hysteresis property wherein the first color state begins to discolor when the temperature increases to reach t₃, and then completely changes into the second color state in a temperature range not lower than t₄, which is higher than t₃; the second color state begins to discolor when the temperature decreases to reach t₂, which is lower than t₃, and completely changes into the first color state in a temperature range not higher than t₁, which is lower than t₂; and the first and second color states are selectively retained in the temperature range between t₂ and t₃.

8. The solid writing material according to claim 7, wherein the component (bii) is enclosed in microcapsules.

9. The solid writing material according to claim 7 or 8, further comprising a excipient.

10. The solid writing material according to claim 1 or 2, wherein the component (b) is a combination of
(bi) an ester compound selected from the group consisting of sucrose fatty acid esters and dextrin fatty acid esters, and
(bii) an endothermic phase-change compound which is always present in a state incompatible with the reversibly thermochromic component and which has a melting point lower than that of the component (a3).

11. The solid writing material according to claim 10, wherein the component (bii) is enclosed in microcapsules.

## Patentansprüche

1. Festes Schreibmaterial umfassend eine reversibel thermochrome Zusammensetzung umfassend eine Kombination von
(a) einer reversibel thermochromen Komponente enthaltend
(a1) eine elektronenabgebende färbende organische Verbindung,
(a2) eine elektronenaufnehmende Verbindung, und
(a3) ein Reaktionsmedium zum reversiblen Bewirken einer Elektronenübertragungsreaktion zwischen den Komponenten (a1) und (a2) in einem spezifischen Temperaturbereich; und
(b) eine Komponente zum Regeln der Wärmeleitung zu der reversibel thermochromen Komponente;
wobei die Komponente (b) eine endotherme Phasenwechselverbindung umfasst, welche immer in einem Zustand vorhanden ist, der mit der reversibel thermochromen Komponente (a) inkompatibel ist, und welche einen Schmelzpunkt aufweist, der niedriger als der der Komponente (a3) ist.

2. Festes Schreibmaterial gemäß Anspruch 1, wobei die reversibel thermochrome Komponente (a) in Mikrokapseln eingeschlossen ist.

3. Festes Schreibmaterial gemäß Anspruch 1 oder 2, wobei die Komponente (b)
(bi) eine Esterverbindung, ausgewählt aus der Gruppe bestehend aus Sucrosefettsäureestern und Dextrinfettsäureestern, ist.

4. Festes Schreibmaterial gemäß einem der Ansprüche 1 bis 3, außerdem umfassend (c) ein Polyolefinwachs.

5. Festes Schreibmaterial gemäß Anspruch 4, wobei das Polyolefinwachs einen Erweichungspunkt von 100 bis 130 °C und eine Penetration von 10 oder weniger aufweist.

6. Festes Schreibmaterial gemäß Anspruch 5, wobei das Polyolefinwachs ein säuremodifiziertes Polyolefinwachs ist.

7. Festes Schreibmaterial gemäß Anspruch 1 oder 2,
in welchem die Komponente (b) (bii) eine endotherme Phasenwechselverbindung ist;
welche reversibel zwischen ersten und zweiten Farbzuständen wechselt, deren Retentionstemperaturbereiche individuell innerhalb spezifischer Temperaturregionen liegen; und
welche eine Hystereseeigenschaft aufweist, wobei der erste Farbzustand sich zu entfärben beginnt, wenn die Temperatur ansteigt, um t₃ zu erreichen, und anschließend vollständig in den zweiten Farbzustand in einem Temperaturbereich wechselt, der nicht niedriger als t₄ ist, welches höher als t₃ ist; der zweite Farbzustand sich zu entfärben beginnt, wenn die Temperatur abnimmt, um t₂ zu erreichen, welches niedriger als t₃ ist, und vollständig in den ersten Farbzustand in einem Temperaturbereich wechselt, der nicht höher als t₁ ist, welches niedriger als t₂ ist; und die ersten und zweiten Farbzustände in dem Temperaturbereich zwischen t₂ und t₃ selektiv beibehalten werden.

8. Festes Schreibmaterial gemäß Anspruch 7, wobei die Komponente (bii) in Mikrokapseln eingeschlossen ist.

9. Festes Schreibmaterial gemäß Anspruch 7 oder 8, außerdem umfassend einen Exzipienten.

10. Festes Schreibmaterial gemäß Anspruch 1 oder 2, wobei die Komponente (b) eine Kombination ist von
(bi) einer Esterverbindung, ausgewählt aus der Gruppe bestehend aus Sucrosefettsäureestern und Dextrinfettsäureestern, und
(bii) einer endothermen Phasenwechselverbindung, welche immer in einem Zustand vorhanden ist, der mit der reversibel thermochromen Komponente inkompatibel ist, und welche einen Schmelzpunkt aufweist, der niedriger als der der Komponente (a3) ist.

11. Festes Schreibmaterial gemäß Anspruch 10, wobei die Komponente (bii) in Mikrokapseln eingeschlossen ist.

## Revendications

1. Matériau d'écriture solide comprenant une composition thermochromique de manière réversible comprenant une combinaison
(a) d'un composant thermochromique de manière réversible contenant
(a1) un composé organique colorant donneur d'électrons
(a2) un composé accepteur d'électrons, et
(a3) un milieu réactionnel pour provoquer de manière réversible une réaction de transfert d'électrons entre les composants (a1) et (a2) dans une plage de températures spécifique ; et
(b) d'un composant pour réguler la conduction thermique vers le composant thermochromique de manière réversible ;
dans lequel le composant (b) comprend un composé à changement de phase endothermique qui est toujours présent dans un état incompatible avec le composant thermochromique de manière réversible (a) et qui présente un point de fusion inférieur à celui du composant (a3).

2. Matériau d'écriture solide selon la revendication 1, dans lequel le composant thermochromique de manière réversible (a) est enfermé dans des microcapsules.

3. Matériau d'écriture solide selon la revendication 1 ou 2, dans lequel le composant (b) est
(bi) un composé d'ester sélectionné dans le groupe constitué des esters de saccharose d'acides gras et des esters de dextrine d'acides gras.

4. Matériau d'écriture solide selon l'une quelconque des revendications 1 à 3, comprenant en outre (c) une cire de polyoléfine.

5. Matériau d'écriture solide selon la revendication 4, dans lequel la cire de polyoléfine présente un point de ramollissement de 100 à 130 °C et une pénétration de 10 ou moins.

6. Matériau d'écriture solide selon la revendication 5, dans lequel la cire de polyoléfine est une cire de polyoléfine modifiée par acide.

7. Matériau d'écriture solide selon la revendication 1 ou 2,
dans lequel le composant (b) est (bii) un composé à changement de phase endothermique ;
qui change de manière réversible entre des premier et second états de couleur dont les plages de températures de rétention sont individuellement dans des régions de températures spécifiques ; et
qui présente une propriété d'hystérésis dans lequel le premier état de couleur commence à se décolorer quand la température augmente pour atteindre t₃, et passe ensuite complètement au second état de couleur dans une plage de températures qui n'est pas inférieure à t₄, qui est supérieure à t₃ ; le second état de couleur commence à se décolorer quand la température diminue pour atteindre t₂, qui est inférieure à t₃, et passe complètement au premier état de couleur dans une plage de températures qui n'est pas supérieure à t₁, qui est inférieure à t₂; et les premier et second états de couleur sont retenus sélectivement dans la plage de températures entre t₂ et t₃.

8. Matériau d'écriture solide selon la revendication 7, dans lequel le composant (bii) est enfermé dans des microcapsules.

9. Matériau d'écriture solide selon la revendication 7 ou 8, comprenant en outre un excipient.

10. Matériau d'écriture solide selon la revendication 1 ou 2, dans lequel le composant (b) est une combinaison
(bi) d'un composé d'ester sélectionné dans le groupe constitué des esters de saccharose d'acides gras et des esters de dextrine d'acides gras, et
(bii) d'un composé à changement de phase endothermique qui est toujours présent dans un état incompatible avec le composant thermochromique de manière réversible et qui présente un point de fusion inférieur à celui du composant (a3).

11. Matériau d'écriture solide selon la revendication 10, dans lequel le composant (bii) est enfermé dans des microcapsules.
